# EUROPÄISCHE PATENTSCHRIFT

(11) **EP 3 522 575 B1**
(45) Veröffentlichungstag und Bekanntmachung des Hinweises auf die Patenterteilung: **13.09.2023**
(21) Anmeldenummer: 18155390.0
(22) Anmeldetag: 06.02.2018
(51) Int. Cl.: H04W 4/021, H04W 4/46, H04W 4/44, H04W 52/28, H04W 52/36

(54) **VERFAHREN UND VORRICHTUNG ZUR STEUERUNG EINER TELEKOMMUNIKATIONSEINRICHTUNG IN ABHÄNGIGKEIT EINER ERMITTELTEN GEOGRAPHISCHEN POSITION ZUM AUSTAUSCH VON FAHRZEUG-KOMMUNIKATIONSNACHRICHTEN**
METHOD AND DEVICE FOR CONTROLLING A TELECOMMUNICATION DEVICE BASED ON A DETERMINED GEOGRAPHIC POSITION FOR EXCHANGING VEHICLE COMMUNICATION MESSAGES
PROCÉDÉ ET DISPOSITIF DE COMMANDE D'UN DISPOSITIF DE TÉLÉCOMMUNICATION SELON UNE POSITION GÉOGRAPHIQUE DÉTERMINÉE POUR L'ÉCHANGE DE NOTIFICATIONS DE COMMUNICATION DE VÉHICULE

(43) Veröffentlichungstag der Anmeldung: 07.08.2019
(73) Patentinhaber: Deutsche Telekom AG, 53113 Bonn (DE)
(72) Erfinder: KLATT, Axel, 50999 Köln (DE)
(74) Vertreter: Schwöbel, Thilo K.

(56) Entgegenhaltungen:
- DE-A1-102015 219 110
- DE-A1-102016 205 143
- LG ELECTRONICS INC: "Introduction of V2X feature in 36.300", 3GPP DRAFT; 36300_CR0989_(REL-14)_R2-1702414, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , Bd. RAN WG2, Nr. Athens, Greece; 20170213 - 20170217 5. März 2017 (2017-03-05), XP051232510, Gefunden im Internet: URL:http://www.3gpp.org/ftp/Meetings_3GPP_ SYNC/RAN/Docs/ [gefunden am 2017-03-05]
- ERICSSON: "Location-aware resource allocation for V2X", 3GPP DRAFT; R2-165515 - LOCATION-AWARE RESOURCE ALLOCATION FOR V2X, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA , Bd. RAN WG2, Nr. Gothenburg, Sweden; 20160822 - 20160826 21. August 2016 (2016-08-21), XP051126979, Gefunden im Internet: URL:http://www.3gpp.org/ftp/Meetings_3GPP_ SYNC/RAN2/Docs/ [gefunden am 2016-08-21]

## Beschreibung

### Stand der Technik

Die Erfindung betrifft ein Verfahren zur Steuerung einer Telekommunikationseinrichtung in Abhängigkeit einer ermittelten geographischen Position oder eines ermittelten geographischen Bereichs der Telekommunikationseinrichtung, wobei die Telekommunikationseinrichtung gemäß einer Gerät-zu-Gerät-Funktionalität und/oder einer Sidelink-Funktionalität zum Austausch von Fahrzeugkommunikationsnachrichten konfiguriert ist.

Die Erfindung betrifft des Weiteren ein System zur Steuerung einer Telekommunikationseinrichtung in Abhängigkeit einer ermittelten geographischen Position oder eines ermittelten geographischen Bereichs der Telekommunikationseinrichtung, wobei die Telekommunikationseinrichtung - gemäß einer Gerät-zu-Gerät-Funktionalität und/oder einer Sidelink-Funktionalität - zum Austausch von Fahrzeugkommunikationsnachrichten konfiguriert ist.

Die Erfindung betrifft ferner eine Telekommunikationseinrichtung, insbesondere Fahrzeugtelekommunikationseinrichtung, zur Steuerung der Telekommunikationseinrichtung in Abhängigkeit einer ermittelten geographischen Position oder eines ermittelten geographischen Bereichs der Telekommunikationseinrichtung, wobei die Telekommunikationseinrichtung gemäß einer Gerät-zu-Gerät-Funktionalität und/oder einer Sidelink-Funktionalität zum Austausch von Fahrzeugkommunikationsnachrichten konfiguriert ist.

Ferner betrifft die Erfindung eine Basisstationseinrichtung eines Telekommunikationsnetzes zur Steuerung einer erfindungsgemäßen Telekommunikationseinrichtung, wobei die Basisstationseinrichtung derart konfiguriert ist, dass durch die Basisstationseinrichtung die wenigstens eine Zoneninformation betreffend die wenigstens eine geographische Zone zu der Telekommunikationseinrichtung übertragen wird.

Des Weiteren betrifft die Erfindung ein Computerprogramm umfassend Befehle, mit deren Hilfe die Schritte eines erfindungsgemäßen Verfahrens durchführbar sind, und ein computerlesbares Medium, vorgesehen zur Speicherung eines Computerprogramms, oder ein Datenträgersignal, vorgesehen zur Übertragung eines Computerprogramms, wobei das computerlesbare Medium oder das Datenträgersignal das erfindungsgemäße Computerprogramm speichert oder überträgt.

Durch Verwendung von Vehicle-to-Vehicle Kommunikationsmechanismen ergeben sich neuartige Möglichkeiten für den Austausch von Daten zwischen verschiedenen Fahrzeugen und zwischen Fahrzeugen und anderen Entitäten, wodurch diverse Vorteile realisierbar sind.

LTE V2V/V2X ist der von der 3GPP (Third Generation Partnership Project) in der Version 14 (Release 14) standardisierte Ansatz, die LTE-Technologie (Long Term Evolution Technologie) für die Kommunikation zwischen Fahrzeugen ("vehicle to vehicle" - V2V), sowie zwischen Fahrzeugen einerseits und beispielsweise (dynamischen) Verkehrszeichen oder Ampelanlagen andererseits ("vehicle to everything" - V2X) zu optimieren. Hierzu wird ein "device to device" - D2D Ansatz (bzw. Gerät-zu-Gerät-Ansatz) verwendet, mittels dessen eine direkte Kommunikation (über das sogenannte PC5 Interface bzw. die PC5 Schnittstelle) zwischen Terminals (bzw. Telekommunikationseinrichtungen) ermöglicht werden kann, um die spezifischen Bedürfnisse für die Fahrzeug-zu-Fahrzeug Kommunikation ergänzt.

Spezifische Ergänzungen tragen beispielsweise der Bewegung der Terminals (bzw. Telekommunikationseinrichtungen) Rechnung durch Änderungen des physical LTE Layers (d.h. der physischen LTE-Schnittstelle), um relative Geschwindigkeiten von Fahrzeugen von bis zu 500 km/h zu unterstützen, die Besonderheiten des typischerweise benutzten sog. ITS ("Intelligent Transport Systems") Bandes um 5.9 GHz, sowie die Ortsbasiertheit der Aussendungen. Ferner sind Prozeduren vorgehen, welche eine Aufteilung der Ressourcen in Frequenz und Zeit zwischen den unterschiedlichen Fahrzeugen und der Infrastruktur definieren. Nicht zuletzt sind Operator-übergreifende Kommunikationsmöglichkeiten vorgesehen, damit die Kommunikation zwischen Fahrzeugen nicht vom Mobilfunkbetreiber abhängig ist.

LTE V2V/V2X macht sich gegenüber IEEE 802.11p den Vorteil einer zentralen Steuerung der Ressourcenvergabe durch das steuernde Mobilfunknetz (hier die Basisstationseinrichtung bzw. den eNodeB) zu Nutze, um eine lastabhängige Ressourcenkonfiguration unter Minimierung der Kollisionen zu konfigurieren. Ferner erlaubt LTE V2V/V2x auch die Vorallokierung von Ressourcen zur Übermittlung der Fahrzeuginformationen im Voraus ("semi-persistent scheduling").

Die DE 10 2016 205 143 A1 offenbart ein Verfahren zum Anpassen einer direkten Fahrzeug-zu-Fahrzeug-Kommunikation basierend auf Information über ortsabhängige Übertragungsparameter. Die DE 10 2015 219 110 A1 betrifft ein Verfahren zur Verbesserung der Signalqualität mindestens eines Kommunikationsdienstes im Bereich eines Fahrzeugs. LG ELECTRONICS INC: "Introduction of V2X feature in 36.300", 3GPP DRAFT; 36300_CR0989_(REL-14)_R2-1702414, 3GPP, MOBILE COMPETENCE CENTRE; 650, ROUTE DES LUCIOLES; F-06921 SOPHIA-ANTIPOLIS CEDEX; FRANCE, Bd. RAN WG2, Nr. Athens, Greece, 5. März 2017, XP051232510 betrifft V2X Services. ERICSSON: "Location-aware resource allocation for V2X", 3GPP DRAFT, R2-165515, 3GPP, MOBILE COMPETENCE CENTRE; 650; ROUTE DES LUCIOLES; F-06921 SOPHIA-ANTIPOLIS CEDEX; FRA, Bd. RAN WG2, Nr. Gothenburg, Sweden, 21. August 2016, XP051126979 betrifft Mechanismen zur Ressourcen-Allokierung.

### Offenbarung der Erfindung

Der Erfindung liegt die Aufgabe zugrunde, ein optimiertes Verfahren, sowie ein System zur Steuerung einer Telekommunikationseinrichtung bzw. eines Terminals in Abhängigkeit der geographischen Position oder des geographischen Bereichs der Telekommunikationseinrichtung zur Verfügung zu stellen, so dass das Verhalten der Telekommunikationseinrichtung - insbesondere mit Blick auf eine Begrenzung der Sendeleistung bezüglich Fahrzeugkommunikationsnachrichten, die gemäß einer Gerät-zu-Gerät-Funktionalität und/oder einer Sidelink-Funktionalität ausgetauscht werden - standardkonform erfolgt und dennoch die Telekommunikationseinrichtung vergleichsweise einfach aufgebaut und betreibbar sein kann.

Die Aufgabe wird erfindungsgemäß gelöst durch ein Verfahren gemäß Anspruch 1.

Es ist dadurch gemäß der vorliegenden Erfindung in vorteilhafter Weise möglich, die Steuerung der Telekommunikationseinrichtung in Abhängigkeit der ermittelten geographischen Position oder des ermittelten geographischen Bereichs der Telekommunikationseinrichtung vorzunehmen, d.h. wenn sich die Telekommunikationseinrichtung zum Ermittlungszeitpunkt an einer bestimmten Stelle (Position) bzw. in einem bestimmten Bereich (insbesondere einer geographischen Zone) befindet, wird erfindungsgemäß die Steuerung der Telekommunikationseinrichtung bzw. das Verhalten der Telekommunikationseinrichtung an die ermittelte Position bzw. den ermittelten Bereich angepasst, insbesondere hinsichtlich der Sendeleistungssteuerung und/oder mit Blick auf eine Sendeleistungsbegrenzung der Telekommunikationseinrichtung beim Senden von Fahrzeugkommunikationsnachrichten gemäß einer Gerät-zu-Gerät-Funktionalität und/oder einer Sidelink-Funktionalität.

Dies wird erfindungsgemäß dadurch erreicht, dass in einem ersten Schritt durch (wenigstens) eine Basisstationseinrichtung (insbesondere eine eNodeB-Einrichtung) des Telekommunikationsnetzes wenigstens eine Zoneninformation betreffend wenigstens eine geographische Zone zu der Telekommunikationseinrichtung übertragen wird. Diejenige Basisstationseinrichtung, welche diese Zoneninformation aussendet, ist insbesondere eine Basisstationseinrichtung, die einen geographischen Funkabdeckungsbereich aufweist, in den die geographische Zone (wenigstens teilweise) fällt. Falls die geographische Zone eine solche Ausdehnung bzw. Anordnung hat, dass der Funkabdeckungsbereich mehrerer Basisstationseinrichtungen davon berührt ist (bzw. Teil davon ist), ist es erfindungsgemäß vorgesehen, dass alle solche Basisstationseinrichtungen die Zoneninformation (bzw. jeweils eine entsprechende Zoneninformation) aussenden. Ferner ist es erfindungsgemäß auch vorgesehen, dass solche Basisstationseinrichtungen die Zoneninformation (informationshalber) aussenden, deren Funkabdeckungsbereich derart liegen, dass die durch die Zoneninformation indizierte geographische Zone nicht Teil solcher Funkabdeckungsbereiche ist. Dennoch soll erfindungsgemäß gerade vermieden werden, dass sämtliche zu indizierenden geographischen Zonen (durch entsprechende Zoneninformationen) in einem geographisch vergleichsweise großen Gebiet (etwa von mehr als 30 km Radius oder von mehr als 50 km Radius) durch die betroffenen Basisstationseinrichtungen den dort befindlichen Telekommunikationseinrichtungen mitgeteilt werden; entsprechend ist die Übermittlung bzw. Aussendung der Zoneninformation durch solche Basisstationseinrichtungen, deren Funkabdeckungsbereiche derart liegen, dass die durch die Zoneninformation indizierte geographische Zone nicht Teil dieser Funkabdeckungsbereiche ist, beispielsweise auf die direkten Nachbar-Basisstationseinrichtungen derjenigen Basisstationseinrichtungen beschränkt, die einen geographischen Funkabdeckungsbereich aufweisen, in den die (durch die Zoneninformation zu indizierende) geographische Zone (wenigstens teilweise) fällt.

Erfindungsgemäß wird in einem dem ersten Schritt nachfolgenden zweiten Schritt zu einem Ermittlungszeitpunkt die geographische Position oder der geographische Bereich der Telekommunikationseinrichtung ermittelt und in einem dem zweiten Schritt nachfolgenden dritten Schritt - für den Fall, dass die ermittelte geographische Position oder der ermittelte geographische Bereich der Telekommunikationseinrichtung als in die geographische Zone fallend erkannt wird - eine Steuerung der Telekommunikationseinrichtung entsprechend einer für die geographische Zone geltenden Vorgabe vorgenommen. Der zweite Schritt sowie die Prüfung des dritten Schritts, ob die ermittelte geographische Position oder der ermittelte geographische Bereich der Telekommunikationseinrichtung in die geographische Zone fällt, wird erfindungsgemäß insbesondere wiederholt, bevorzugt in regelmäßigen Zeitabständen oder aber mit einer Mindestwiederholrate bzw. nach einer maximalen Zeitdauer, durchgeführt.

Die vorliegende Erfindung bezieht sich insbesondere auf eine Besonderheit des 5.9 GHz ITS (Intelligent Traffic System) Bandes, welche Anforderungen an das Aussenden von V2X Nachrichten (Fahrzeugkommunikationsnachrichten) im Frequenzbereich von 5875 bis 5925 MHz stellt, um einen angrenzenden Frequenzbereich auf welchem Mautsysteme (CEN DRSC) betrieben werden (namentlich 5795 bis 5815 MHz) besonders vor negativen Einflüssen durch Interferenzen zu schützen. CEN DRSC Stationen sind typischerweise an Mautbrücken oder Mautstationen installiert um eine lokale Kommunikation mit sog. On Board Units (OBU) in Fahrzeugen zwecks Erfassung von Gebühreninformationen zu ermöglichen. In diesem Zusammenhang wird auch von "Toll Plazas" (d.h. Mautstationen oder Zollstationen) mit Ausdehnungen von wenigen 10 m (in Straßenverlaufsrichtung) auf Straßen oder Autobahnen gesprochen. Die Regelungen zum Schutz des genannten Frequenzbereiches sind in Europa im Standard-Dokument ETSI TS 102 792 V1.2.1 klar geregelt. Mit Status dieser Europäischen Technical Specification ist vorgesehen, dass Aussendungen im Frequenzbereich von 5875 bis 5925 MHz in den sogenannten Tolling Zones der Toll Plazas eine max. Ausgangsleistung nicht überschreiten dürfen, um keine Interferenz zu den CEN DRSC Stationen zu erzeugen. Um einen weitreichenden negativen Einfluss auf die CEN DRSC Stationen auszuschließen definiert die ETSI TS 102 792 sogenannte "Protection Zones" als geographische Zonen, welche sich aus der geografischen Position der CEN DRSC Station und einem defnierten Radius ergeben. Innerhalb dieser Protection Zones sind Aussendungen im Frequenzbereich 5875 - 5925 MHz nur mit deutlich reduzierter Ausgangsleistung erlaubt. Um ein derartiges System effizient zu betreiben, muss jede ITS Station - d.h. jede Telekommunikationseinrichtung -, welche im Bereich 5875 - 5925 MHz arbeitet, eine lokale oder cloudbasierte Datenbank sämtlicher CEN DRSC Orten bzw. Stationen mit ihren jeweiligen Protection Zones vorhalten und pflegen (vgl. Kapitel 5.2 in ETSI TS 102 792). Alternativ oder ergänzend hierzu beschreibt Kapitel 5.2.5 der ETSI TS 102 792 eine weitere lokale Methode die Präsenz einer Protection Zone den betroffenen (bzw. in der Nähe befindlichen) ITS Stationen (d.h. den Telekommunikationseinrichtungen) mitzuteilen, welche auf der periodischen Aussendung von "Beacon" Informationen ("CEN DSRC frame headers") durch die CEN DRSC Toll Station basiert. Beide diese genannten Verfahren haben deutliche Nachteile in Form von a) Vorhalten von aktuellen Datenbank Informationen oder b) Aussendung von periodischen Beacons auf dem Frequenzbereich 5 795 MHz to 5 815 MHz. Beide Ansätze sind jeweils mit Zusatzaufwand auf der Seite der Telekommunikationseinrichtungen (d.h. bei den ITS Stationen) verbunden. Speziell im Fall, dass eine ITS V2X Station keine Tolling Kommunikation unterstützt, ist ein recht hoher Zusatzaufwand notwendig (cloud-basierte Kommunikation mit einer zentralen CEN DRSC Datenbank oder Implementierung eines Empfängers für den Frequenzbereich 5795 bis 5815 MHz, zum Empfang der Beacon-Information), welche für ITS basierte Kommunikation (insbesondere V2X) nicht gebraucht wird. Speziell beim Einsatz von 3GPP basierter V2X Kommunikationstechnik (LTE-V2X) wäre der Aufwand eine zusätzliche IEEE basierte Funk-Technologie zum Erkennen der CEN DRSC Beacons in den ITS/V2X Stationen einzubauen mit hohen Kosten verbunden. Die Cloud-basierte Datenbank Methode setzt auch hier eine Online-Verbindung mit einem zentralen Datenbank-Server voraus.

Gemäß der vorliegenden Erfindung wird somit unter anderem für die hier angesprochene Situation (wonach Aussendungen von Fahrzeugkommunikationsnachrichten (oder allgemein von V2X- (Vehicle to everything) bzw. P2X-(Pedestrian to everything) -kommunikationsnachrichten) im Frequenzbereich von 5875 MHz bis 5925 MHz in den sogenannten Tolling Zones der Toll Plazas eine maximale Ausgangsleistung nicht überschreiten dürfen) eine Lösung vorgeschlagen, mittels der LTE/NR basierte V2X Kommunikation im ITS Frequenzbereich von 5875 MHz bis 5925 MHz mit Funktionen versehen wird, welche eine Leistungsregelung im Bereich von Tolling Plazas ermöglichen, ohne dabei auf eine lokale oder Cloud-basierte Datenbank der CEN DRSC Stationen oder die lokale Aussendung von CEN DRSC Beacons angewiesen zu sein.

Gemäß C-V2X sind im Wesentlichen zwei unterschiedliche Modi vorgesehen, mittels derer die Ressourcen und die Aussendung von V2X-Nachrichten (bzw. Fahrzeugkommunikationsnachrichten) auf dem sog. Sidelink (PC5 Schnittstelle), bzw. eine Sidelink-Funktionalität oder eine Gerät-zu-Gerät-Funktionalität nutzend, gesteuert werden kann. Zum einen handelt es sich hierbei um den sogenannten Mode 4, mittels SIB21-Unterstützung, wobei die Ressourcen und Aussendungsbedingungen über einen System Information Block (Nr. 21) der LTE Zelle gesteuert werden, wobei die Informationen über den SIB21 allgemeingültig für alle C-V2X Stationen (d.h. alle Telekommunikationseinrichtungen) innerhalb einer von einer Basisstationseinrichtung bzw. einer eNodeB-Einrichtung betreuten Zelle (bzw. Funkzelle) sind, d.h. alle diese Telekommunikationseinrichtungen betreffen. Eine dedizierte C-V2X Stations-Allokierung (d.h. eine dezidierte Resourcenbereitstellung für im Extremfall lediglich eine Telekommunikationseinrichtung bzw. für eine Mehrzahl von Telekommunikationseinrichtungen (jedoch nicht alle Telekommunikationseinrichtungen) in der Funkzelle) ist mittels des sog. Mode 3 möglich. Hierbei definiert eine Verbindung aus dem Mobilfunknetz via LTE (oder NR) dediziert pro C-V2X Station (d.h. pro Telekommunikationseinrichtung) die zu nutzenden (Funk-)Ressourcen und deren Randbedingungen. Beide Modi können im Rahmen der vorliegenden Erfindung zur Übertragung der Zoneninformation (im ersten Schritt) von der Basisstationseinrichtung zur Telekommunikationseinrichtung, d.h. zur Realisierung der gestellten Aufgabe, herangezogen werden.

Gemäß einer Ausführungsform der vorliegenden Erfindung ist es vorgesehen, dass die Steuerung der Telekommunikationseinrichtung in Abhängigkeit der ermittelten geographischen Position oder des ermittelten geographischen Bereichs der Telekommunikationseinrichtung zur Sendeleistungssteuerung und/oder zur Sendeleistungsbegrenzung der Telekommunikationseinrichtung beim Senden der Fahrzeugkommunikationsnachrichten dient, insbesondere zur Sendeleistungssteuerung und/oder zur Sendeleistungsbegrenzung der Telekommunikationseinrichtung beim Senden in einem den Betrieb von CEN DRSC Mautstationen potentiell störenden Frequenzbereich, insbesondere im Frequenzbereich zwischen 5875 MHz und 5925 MHz, wobei insbesondere die für die geographische Zone geltenden Vorgabe einer geringeren maximal erlaubten Sendeleistung entspricht als außerhalb der geographischen Zone.

Dadurch ist es gemäß einer Ausführungsform der Erfindung möglich, dass innerhalb des durch die Zoneninformation indizierten geographischen Bereichs eine Telekommunikationseinrichtung lediglich mit einer maximalen Sendeleistung (insbesondere eine Fahrzeugkommunikationsnachricht und insbesondere beim Senden in einem den Betrieb von CEN DRSC Mautstationen potentiell störenden Frequenzbereich, insbesondere im Frequenzbereich zwischen 5875 MHz und 5925 MHz) sendet. Vorliegend wird damit eine geografisch selektive Reduzierung oder Unterdrückung der Aussendung von V2X-Nachrichten (bzw. Fahrzeugkommunikationsnachrichten) in einem Mobilfunksystem mittels LTE-V (d.h. LTE V2V/V2X) oder 3GPP basierten Nachfolgesystemen basierend auf dem 3GPP New Radio ("NR") Standards vor. Das erfindungsgemäße Verfahren ermöglicht insbesondere eine Aussendung von V2X-Nachrichten (bzw. Fahrzeugkommunikationsnachrichten) in einem begrenzten geografischen Bereich zu reduzieren oder komplett zu unterdrücken bzw. die Ausgangsleistung der V2X-Nachrichten (Fahrzeugkommunikationsnachrichten) in diesem geographischen Bereich zu verringern. Alternativ hierzu kann es (gemäß einer alternativen Ausführungsform der Erfindung) erfindungsgemäß auch vorgesehen sein, dass anstelle einer Leistungsbegrenzung (bzw. einer maximalen Sendeleistung) als für die geographische Zone (im dritten Schritt) geltende Vorgabe eine Erhöhung der Sendeleistung als für die geographische Zone (im dritten Schritt) geltende Vorgabe vorgesehen ist.

Erfindungsgemäß ist es vorgesehen, dass die Zoneninformation - neben der geographischen Zone - eine erste weitere geographische Zone betrifft, wobei die erste weitere geographische Zone insbesondere einem ersten weiteren statisch vorgegebenen geographischen Bereich - insbesondere in Form eines unter Verwendung von absoluten Koordinatenangaben definierten Georeferenzbereichs - entspricht und dass die erste weitere geographische Zone insbesondere einem geographischen Bereich oder einem Gebiet in der Umgebung einer Mautstation oder einer Zollstation entspricht, wobei die erste weitere geographische Zone die geographische Zone umfasst oder umgibt.

Dadurch ist es erfindungsgemäß vorgesehen, dass - neben der geographischen Zone - eine erste weitere geographische Zone definiert wird, wobei die erste weitere geographische Zone die geographische Zone umfasst, d.h. die geographische Zone ist eine echte Teilmenge der ersten weiteren geographsichen Zone.

Gemäß einer Ausführungsform der vorliegenden Erfindung ist es vorgesehen, dass die Zoneninformation - neben der geographischen Zone und der ersten weiteren geographischen Zone - eine zweite weitere geographische Zone betrifft, wobei die zweite weitere geographische Zone insbesondere einem zweiten weiteren statisch vorgegebenen geographischen Bereich - insbesondere in Form eines unter Verwendung von absoluten Koordinatenangaben definierten Georeferenzbereichs - entspricht und dass die zweite weitere geographische Zone insbesondere einem geographischen Bereich oder einem Gebiet in der Umgebung einer Mautstation oder einer Zollstation entspricht und insbesondere sowohl die geographische Zone als auch die erste weitere geographische Zone umfasst oder umgibt.

Dadurch ist es gemäß einer solchen Ausführungsform der Erfindung möglich, dass - neben der geographischen Zone und der ersten weiteren geographischen Zone - eine zweite weitere geographische Zone definiert wird, wobei die zweite weitere geographische Zone bevorzugt sowohl die geographische Zone als auch die erste weitere geographische Zone umfasst, d.h. sowohl die geographische Zone als auch die erste weitere geographische Zone sind jeweils insbesondere echte Teilmengen der zweiten weiteren geographsichen Zone. Dies muss jedoch keine strikte Bedingung sein, d.h. es ist denkbar, dass ein Teil der Begrenzung der zweiten weiteren geographischen Zone mit der Begrenzung der geographischen Zone und/oder der ersten weiteren geographischen Zone zusammenfällt oder aber, dass die geographische Zone (in Teilbereichen oder vollständig) und/oder die erste weitere geographische Zone (in Teilbereichen oder vollständig) über die zweite weitere geographische Zone hinausgeht. Alternativ dazu kann aber die zweite weitere geographische Zone auch die geographische Zone und/oder die erste weitere geographische Zone umschließen oder umgeben, d.h. die zweite weitere geographische Zone schließt sich (in Teilbereichen) an die geographische Zone und/oder an die erste weitere geographische Zone an bzw. setzt diese (jedenfalls in Teilbereichen ihres Umfangs) fort (ohne dass diese Teil der zweiten weiteren geographischen Zone ist).

Erfindungsgemäß kann es somit sowohl vorgesehen sein, dass die Zoneninformation die geographische Zone, die erste weitere geographische Zone und die zweite weitere geographische Zone als (zumindest teilweise) überlappende geographische Zonen indiziert, als auch, dass die Zoneninformation die geographische Zone, die erste weitere geographische Zone und die zweite weitere geographische Zone als (übewiegend überlappungsfreie) disjunkte geographische Zonen indiziert (die sich aber typischerweise aneinander anschließen, d.h. eine sich (etwa auf einer Straße) bewegende Telekommunikationseinrichtung fährt zuerst in die zweite weitere geographische Zone ein, anschließend (entweder - bei Überlappung der geographisches Zonen - zusätzlich oder auch nicht zusätzlich - bei disjunkten geographische Zonen) in die erste weitere geographische Zone und anschließend (wiederum entweder - bei Überlappung der geographisches Zonen - zusätzlich oder auch nicht zusätzlich - bei disjunkten geographische Zonen) in die geographische Zone ein. Die geographische Zone, die erste weitere geographische Zone und die zweite weitere geographische Zone sind erfindungsgemäß insbesondere derart angeordnet, dass nach Durchfahren und Verlassen der geographischen Zone die Telekommunikationseinrichtung in die erste weitere geographische Zone einfährt und danach (d.h. nach deren Durchfahren und Verlassen) in die zweite weitere geographische Zone einfährt.

Die ermittelte geographische Position bzw. der ermittelte geographische Bereich der Telekommunikationseinrichtung gibt daber insbesondere den Ort der Telekommunikationseinrichtung, im Fall einer Fahrzeugtelekommunikationseinrichtung auch den Ort des Fahrzeugs an. Dabei ist es möglich, dass die ermittelte geographische Position bzw. der ermittelte geographische Bereich der Telekommunikationseinrichtung einer geographischen Koordinateninformation entspricht, die beispielsweise durch ein Global Positioning System (GPS)-fähiges Element (oder ein Elemet gemäß eines anderen Satellitennavigationssystems wie zum Beispiel Galileo, Glonass oder dergleichen), das der Telekommunikationseinrichtung und/oder dem Fahrzeug zugeordnet (oder an dem Fahrzeug angeordnet) ist, bereitgestellt wird.

Gemäß einer Ausführungsform der vorliegenden Erfindung ist es vorgesehen, dass die geographische Zone (bzw. die erste weitere geographische Zone und/oder die zweite weitere geographische Zone) einem statisch vorgegebenen geographischen Bereich - insbesondere in Form eines unter Verwendung von absoluten Koordinatenangaben definierten Georeferenzbereichs - entspricht und dass die geographische Zone (bzw. die erste weitere geographische Zone und/oder die zweite weitere geographische Zone) insbesondere einem geographischen Bereich oder einem Gebiet in der Umgebung einer Mautstation oder einer Zollstation entspricht.

Hierdurch ist es gemäß der vorliegenden Erfindung und bei Steuerung der Telekommunikationseinrichtung derart, dass die Vorgabe gemäß dem dritten Schritt einer (jeweils für die geographische Zone bzw. die erste weitere geographische Zone bzw die zweite weitere geographische Zone unterschiedlichen) maximalen Sendeleistung der Telekommunikationseinrichtung entspricht, insbesondere so, dass ein Betrieb von CEN DRSC Mautstationen weniger oder nicht gestört wird, insbesondere in einem Frequenzbereich zwischen 5875 MHz und 5925 MHz.

Gemäß einer Ausführungsform der vorliegenden Erfindung ist es vorgesehen, dass die Zoneninformation geographische Informationen umfasst, insbesondere unter Verwendung von absoluten Koordinatenangaben zur Bestimmung:
-- der geographischen Zone, oder
-- der geographischen Zone und der ersten weiteren geographischen Zone, oder
-- der geographischen Zone, der ersten weiteren geographischen Zone und der zweiten weiteren geographischen Zone
   und/oder dass die Zoneninformation wenigstens eine Steuerungsinformation bezüglich der Vorgabe zur Steuerung der Telekommunikationseinrichtung umfasst, wobei die Steuerungsinformation insbesondere die jeweils maximal erlaubte Sendeleistung
-- innerhalb der geographischen Zone, oder
-- innerhalb der geographischen Zone und innerhalb der ersten weiteren geographischen Zone, oder
-- innerhalb der geographischen Zone, innerhalb der ersten weiteren geographischen Zone und innerhalb der zweiten weiteren geographischen Zone umfasst.

Hierdurch ist es gemäß einer Ausführungsform der Erfindung in vorteilhafter Weise möglich, dass von der Basisstationseinrichtung (bzw. einer Mehrzahl von Basisstationseinrichtungen) eine Steuerungsinformation für die jeweilige geographische Zone angepasst für die Telekommunikationseinrichtung vorgegeben werden kann.

Gemäß einer Ausführungsform der vorliegenden Erfindung ist es vorgesehen, dass die geographische Zone durch eine Anzahl von gleichartigen -im Wesentlichen rechteckförmigen - untereinander disjunkten Teilzonen gebildet wird, wobei die Teilzonen zusammengenommen insbesondere ein zusammenhängendes Gebiet in der Umgebung einer Mautstation oder einer Zollstation bilden, -- wobei zur Definition des bezüglich des Rasters gemäß der C-V2X-Zonen verschobenen Rasters insbesondere eine absolute Koordinatenangabe als Ausgangspunkt des Rasters oder eine relative Verschiebeinformation verwendet wird, und/oder
-- wobei zur Definition des bezüglich des Rasters gemäß der C-V2X-Zonen verschobenen und/oder verschwenkten Rasters insbesondere eine absolute Koordinatenangabe als Ausgangspunkt des Rasters und/oder eine relative Verschiebeinformation und/oder eine Winkelinformation verwendet wird.

Hierdurch ist es erfindungsgemäß vorteilhaft möglich, die geographische Zone anhand von verschiedenen Teilzonen zu definieren, so dass insbesondere die Telekommunikationseinrichtung in einfacher Weise entscheiden kann, ob sie sich innerhalb der geographische Zone oder nicht befindet. Insbesondere ist bei Verwendung von Teilzonen auf der Basis der C-V2X-Zonen eine besonders effiziente Verwendung und Übertragung der Zoneninformation möglich. Entsprechend ist es gemäß einer Ausführungsform der vorliegenden Erfindung auch vorgesehen, dass die erste weitere und/oder die zweite weitere geographische Zone durch eine Anzahl von gleichartigen - insbesondere im Wesentlichen rechteckförmigen - untereinander disjunkten Teilzonen gebildet wird, wobei die Teilzonen zusammengenommen insbesondere ein zusammenhängendes Gebiet in der Umgebung einer Mautstation oder einer Zollstation bilden, wobei die Teilzonen entlang eines (gegenüber den anderen geographischen Zonen gleiches oder unterschiedliches) Rasters angeordnet sind, wobei als Raster zur Definition der Teilzonen der ersten weiteren bzw. zweiten weiteren geographischen Zone insbesondere
-- ein Raster gemäß oder analog der C-V2X-Zonen verwendet wird, oder
-- ein bezüglich des Rasters gemäß der C-V2X-Zonen verschobenes Raster verwendet wird, wobei zu dessen Definition insbesondere eine absolute Koordinatenangabe als Ausgangspunkt des Rasters oder eine relative Verschiebeinformation verwendet wird, oder
-- ein bezüglich des Rasters gemäß der C-V2X-Zonen verschobenes und/oder verschwenktes Raster verwendet wird, wobei zu dessen Definition insbesondere eine absolute Koordinatenangabe als Ausgangspunkt des Rasters und/oder eine relative Verschiebeinformation und/oder eine Winkelinformation verwendet wird.

Erfindungsgemäß ist es vorgesehen, dass die Zoneninformation geographische Informationen und wenigstens eine Steuerungsinformation bezüglich der Vorgabe zur Steuerung der Telekommunikationseinrichtung innerhalb jeder einzelnen der verschiedenen Teilzonen umfasst, wobei
-- ein gleiches Raster für die geographische Zone und die erste weitere geographische Zone oder ein gleiches Raster für die geographische Zone und sowohl die erste als auch die zweite weitere geographische Zone verwendet wird, wobei die jeweilige Steuerungsinformation für jede der betrachteten Teilzonen innerhalb der geographischen Zone oder innerhalb der ersten weiteren geographischen Zone oder innerhalb der zweiten weiteren geographischen Zone in Form einer verallgemeinerten Bitmapinformation als Teil der Zoneninformation übertragen wird, oder wobei
-- für die geographische Zone einerseits ein auf einer ersten Rasterdefinition beruhendes und erste Teilzone umfassendes erstes Raster und für wenigstens eine der ersten weiteren geographischen Zone und der zweiten weiteren geographischen Zone andererseits ein auf einer zweiten Rasterdefinition beruhendes und zweite Teilzonen umfassendes zweites Raster verwendet wird, wobei die jeweilige Steuerungsinformation für jede der betrachteten ersten Teilzonen in Form einer ersten Bitmapinformation oder einer verallgemeinerten ersten Bitmapinformation und die jeweilige Steuerinformation für jede der betrachteten zweiten Teilzonen in Form einer zweiten Bitmapinformation oder einer verallgemeinerten zweiten Bitmapinformation, jeweils als Teil der Zoneninformation übertragen wird.

Hierdurch ist es in einfacher Weise möglich die geographische Zone und/oder die erste weitere geographische Zone und/oderr die zweite weitere geographische Zone anhand von verschiedenen Teilzonen bzw. Rastern zu definieren, so dass insbesondere die Telekommunikationseinrichtung in einfacher Weise entscheiden kann, ob sie sich innerhalb der geographische Zone oder nicht befindet.

Des Weiteren wird die Aufgabe gelöst durch ein System gemäß Anspruch 9.

Es ist dadurch gemäß der vorliegenden Erfindung in vorteilhafter Weise möglich, ein erfindungsgemäßes System bereitzustellen.

Die Aufgabe wird ferner gelöst durch eine Telekommunikationseinrichtung, insbesondere Fahrzeugtelekommunikationseinrichtung, gemäß Anspruch 10.

Ferner wird die Ausgabe gelöst durch eine Basisstationseinrichtung eines Telekommunikationsnetzes oder Telekommunikationsnetz mit einer Basisstationseinrichtung zur Steuerung einer erfindungsgemäßen Telekommunikationseinrichtung, wobei die Basisstationseinrichtung derart konfiguriert ist, dass durch die Basisstationseinrichtung die wenigstens eine Zoneninformation betreffend die wenigstens eine geographische Zone zu der Telekommunikationseinrichtung übertragen wird.

Des Weiteren wird die Ausgabe gelöst durch ein Computerprogramm umfassend Befehle, mit deren Hilfe die Schritte eines erfindungsgemäßen Verfahrens durchführbar sind, wenn das Computerprogramm auf einer programmierbaren Einrichtung, insbesondere als Teil des Systems, oder auf der Telekommunikationseinrichtung oder auf der Basisstationseinrichtung ausgeführt wird oder wenn das Computerprogramm teilweise auf der Telekommunikationseinrichtung oder einem mit der Telekommunikationseinrichtung verbundenen Fahrzeug und teilweise auf der Basisstationseinrichtung des Telekommunikationsnetzes ausgeführt wird.

Des Weiteren wird die Ausgabe gelöst durch ein computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das erfindungsgemäße Computerprogramm speichert oder überträgt oder wobei das computerlesbare Medium oder das Datenträgersignal den auf der Telekommunikationseinrichtung oder einem mit der Telekommunikationseinrichtung verbundenen Fahrzeug auszuführenden Teil des erfindungsgemäßen Computerprogramms oder den auf der Basisstationseinrichtung des Telekommunikationsnetzes auszuführenden Teil des erfindungsgmeäßen Computerprogramms speichert oder übeträgt.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Ansicht einer Mautstation bzw. einer Zollstation in Draufsicht, wobei mit gestrichelter Linie eine sogenannte "Protection Zone" als geographische Zone mit einem definierten Radius schematisch dargestellt ist.
- **Figur 2**: zeigt schematisch ein Referenzbeispiel einer geographischen Zone in Form einer Ellipse.
- **Figur 3**: zeigt schematisch ein weiteres Referenzbeispiel einer geographischen Zone in Form eines Polygons, wobei das Polygon durch eine Anzahl von vorgegebenen Positionen bestimmt ist.
- **Figur 4**: zeigt schematisch ein weiteres Referenzbeispiel einer geographischen Zone in Form eines Polygons, wobei das Polygon durch eine vorgebene Position und eine Anzahl von vorgegebenen hierzu relativen Abständen bestimmt ist.
- **Figur 5**: zeigt schematisch zwei Beispiele der geographischen Zone sowie der ersten weiteren geographischen Zone und der zweiten weiteren geographischen Zone.
- **Figur 6**: zeigt schematisch ein Beispiel der Definition der geographischen Zone sowie der ersten und zweiten weiteren geographischen Zone mittels Teilzonen gemäß einer Ausführungsform der Erfindung, wobei das gleiche Raster für die geographische Zone sowie die erste und zweite geographische Zone verwendet wird.
- **Figur 7**: zeigt schematisch ein Beispiel der Definition der geographischen Zone sowie der ersten und zweiten weiteren geographischen Zone mittels Teilzonen gemäß einer Ausführungsform der Erfindung, wobei für die geographische Zone ein auf einer ersten Rasterdefinition beruhendes und erste Teilzonen umfassendes erstes Raster umfasst und für die erste und zweite weitere geographische Zone ein auf einer zweiten Rasterdefinition beruhendes und zweite Teilzonen umfassendes zweites Raster verwendet wird.
- **Figur 8**: zeigt schematisch die maximal erlaubte Sendeleistung (in dBm EIRP (Effective Isotropic Radiated Power, effektive isotrope abgestrahlte Leistung), gestrichelte Linie) in Abhängigkeit der Entfernung (in Meter) vom Zentrum der Maut- oder Zollstation und ein Abstufungsbeispiel mit drei Sendeleistungsstufen für eine Telekommunikationseinrichtung (durchgezogene Linie).

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

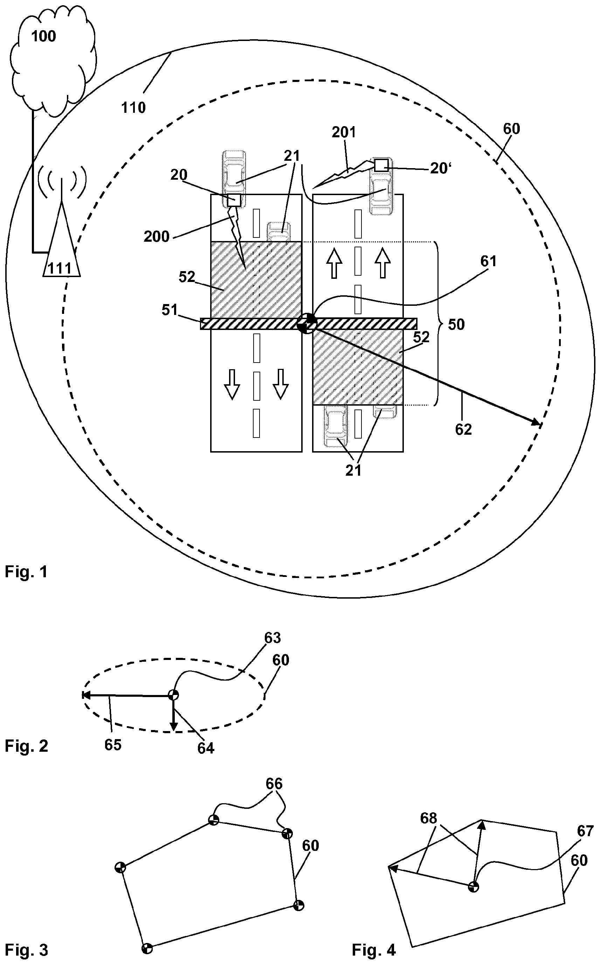

In Figur 1 ist eine schematische Ansicht einer Mautstation 50 bzw. einer Zollstation 50 in Draufsicht gezeigt, wobei mit gestrichelter Linie eine sogenannte "Protection Zone" als geographische Zone 60 mit einem definierten Radius 62 um eine vorgegebene Position 61 schematisch dargestellt ist. Im Bereich der Mautstation (insgesamt dargestellt durch das Bezugszeichen 50) sind schematisch zwei baulich getrennte Fahrbahnen mit jeweils zwei Fahrstreifen abgebildet; in der Figur rechts dargestellt ist eine in der Zeichenebene verlaufende Fahrbahn (mit zwei Fahrstreifen) abgebildet, bei der die Fahrtrichtung der Fahrzeuge in der Zeichnung nach oben weist (vgl. den jeweils dargestellen Fahrtrichtungspfeil auf jeder der beiden Fahrstreifen), während in der Figur links dargestellt eine in der Zeichenebene verlaufende Fahrbahn (ebenfalls mit zwei Fahrstreifen) abgebildet ist, bei der die Fahrtrichtung der Fahrzeuge in der Zeichnung nach unten weist (vgl. den jeweils dargestellen Fahrtrichtungspfeil auf jeder der beiden Fahrstreifen). Die schematisch abgebildeten Fahrzeuge sind jeweils mit dem Bezugszeichen 21 versehen. Die Mautstation bzw. die Zollstation 50 weist im dargestellten Beispiel eine Mautbrücke 51 auf, vor der für jede Fahrtrichtung ein Mauterfassungsbereich 52 angeordnet ist, d.h. ein sich der Mautbrücke 51 näherndes Fahrzeug 21 durchfährt zunächst den Maut- oder Zollerfassungsbereich 52 und unterfährt anschließend die Mautbrücke 51.

Typischerweise ist eine Vielzahl der Fahrzeuge 21 (bzw. sind sogar alle Fahrzeuge 21) mit jeweils mindestens einer Telekommunikationseinrichtung 20 versehen, entweder diese Telekommunikationseinrichtungen 20 sind im jeweiligen Fahrzeug 21 fest eingebaut (und sind dann als Fahrzeugtelekommunikationseinrichtung 20 anzusehen) oder diese Telekommunikationseinrichtungen 20 werden jedenfalls mit dem jeweiligen Fahrzeug 21 mitgeführt (etwa als tragbares Gerät in Form eines Mobiltelefons oder dergleichen). Im Rahmen der vorliegenden Erfindung wird eine Telekommunikationseinrichtung 20 betrachtet, welche sich im dargestellten Beispiel im oben links abgebildeten Fahrzeug 21 befindet. Die Telekommunikationseinrichtung 20 weist eine Antenneneinrichtung auf oder eine Antenneneinrichtung (nicht abgebildet) ist der Telekommunikationseinrichtung 20 zugeordnet. Mit Hilfe der Antenneneinrichtung ist die Telekommunikationseinrichtung 20 in der Lage, Fahrzeugkommunikationsnachrichten 200 auszusenden sowie weitere Fahrzeugkommunikationsnachrichten 201 (welche von anderen, sich in relativer räumlicher Nähe befindlichen Telekommunikationseinrichtungen ausgesandt werden) zu empfangen. In der beispielhaften Darstellung gemäß Figur 1 ist ein weiteres Fahrzeug 21 mit einer weiteren Telekommunikationseinrichtung 20' versehen, welche die weitere Fahrzeugkommunikationsnachricht 201 aussendet. Hierbei werden solche Fahrzeugkommunikationsnachrichten 200, 201 betrachtet, welche gemäß einer Gerät-zu-Gerät-Funktionalität und/oder einer Sidelink-Funktionalität - insbesondere über die sogenannte PC5-Schnittstelle - von den Telekommunikationseinrichtungen 20, 20' ausgesendet bzw. empfangen werden können.

Figur 1 zeigt ferner eine Basisstationseinrichtung 111 (typischerweise eine eNodeB-Einrichtung) als Teil eines Mobilfunkkommunikationsnetzes bzw. Telekommunikationsnetzes 100 (bzw. als Teil eines Zugangsnetzes bzw. Funkzugangsnetzes des Telekommunikationsnetzes 100). Der Basisstationseinrichtung 111 ist eine Funkzelle 110 bzw. ein Funkabdeckungsbereich 110 zugeordnet, wobei die mit gestrichelter Linie dargestellte "Protection Zone" bzw. die geographische Zone 60 teil der Funzelle 110 bzw. des Funkabdeckungsbereichs 110 der Basisstationseinrichtung 111 ist.

Gemäß der vorliegenden Erfindung ist es vorgesehen, dass in einem erfindungsgemäßen Verfahren die Telekommunikationseinrichtung 20 derart in Abhängigkeit ihrer geographischen Position bzw. ihres geographischen Bereichs gesteuert wird (bzw. diese sich aufgrund von empfangener Information in Form der Zoneninformation selbst steuert), dass für eine für die momentane geographische Zone der Telekommunikationseinrichtung 20 geltenden Vorgabe einer Steuergröße eingehalten wird. Insbesondere ist es erfindungsgemäß vorgesehen, dass die Steuergröße der Sendeleistung der Telekommunikationseinrichtung 20 entspricht und dass die Sendeleistung in Abhängigkeit der geographische Zone 60 angepasst wird, insbesondere reduziert wird bzw. jedenfalls nicht eine vorgegebene Maximalleistung überschreitet; jedoch sind auch andere Vorgaben einer (ortsabhängig vorgegebenen) Steuergröße erfindungsgemäß möglich, beispielsweise eine minimale Sendeleistung oder auch eine Vorgabe für die Empfangsbereitschaft der Telekommunikationseinrichtung 20. Die Telekommunikationseinrichtung ist erfindungsgemäß gemäß einer Gerät-zu-Gerät-Funktionalität und/oder einer Sidelink-Funktionalität zum Austausch von Fahrzeugkommunikationsnachrichten 200, 201 konfiguriert, und die ermittelte geographische Position bzw. der ermittellte geographische Bereich der Tele kommunikationseinrichtung wird zu einem betrachteten Ermittlungszeitpunkt bestimmt. Wie bereits erwähnt, ist Voraussetzung für das erfindungsgemäße Verfahren bzw. den Betrieb des erfindungsgemäßen Systems, dass in einem ersten Schritt durch die wenigstens eine Basisstationseinrichtung 111 des Telekommunikationsnetzes 100 wenigstens eine Zoneninformation - betreffend wenigstens eine geographische Zone 60 - zu der Telekommunikationseinrichtung 20 übertragen wird. Diese Übertragung erfolgt typischerweise nicht über eine Gerät-zu-Gerät-Funktionalität bzw. eine Sidelink-Funktionalität (d.h. über eine PC5 Schnittstelle), sondern direkt von der Basisstationseinrichtung 111 zur Telekommunikationseinrichtung 20 (über eine sogenannte Uᵤ-Schnittstelle zwischen einerseits dem Funkzugangsnetzwerk des Telekommunikationsnetzes 100 (bzw. der Basisstationseinrichtung 111) und andererseits der Telekommunikationseinrichtung 20. In einem dem ersten Schritt nachfolgenden zweiten Schritt wird zu einem Ermittlungszeitpunkt die geographische Position oder der geographische Bereich der Telekommunikationseinrichtung 20 ermittelt und im nachfolgenden dritten Schritt - für den Fall, dass die ermittelte geographische Position oder der ermittelte geographische Bereich der Telekommunikationseinrichtung 20 als in die geographische Zone 60 fallend erkannt wird - die Steuerung der Telekommunikationseinrichtung 20 derart vorgenommen, dass die für die geographische Zone 60 geltenden Vorgabe erfüllt wird - etwa eine maximale Sendeleistung für von der Telekommunikationseinrichtung 20 ausgesendete Fahrzeugkommunikationsnachrichten 200 eingehalten wird.

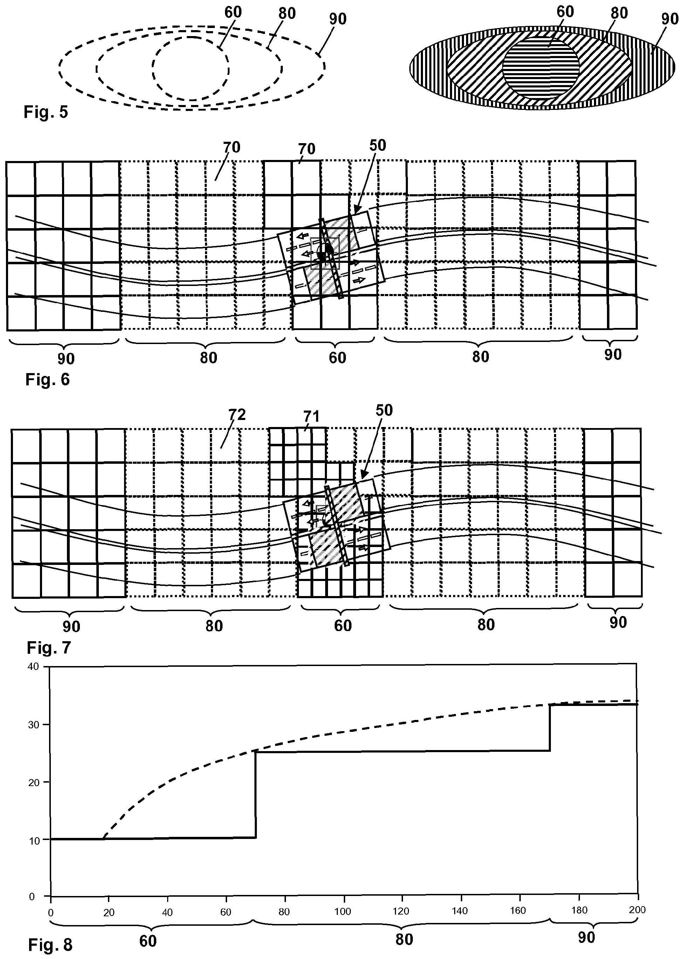

Es ist nun im Rahmen der Erfindung die Möglichkeit vorgesehen, dass nicht nur eine geographische Zone 60 (mit einer für diese Zone geltenden Vorgabe der Steuergröße) vorgesehen ist, sondern dass abgestuft auch für größere Zonen andere Vorgaben erfüllt sein müssen. Dies ist schematisch in Figur 8 dargestellt. Diese Figur stellt schematisch den kontinuierlich verlaufenden Grenzwert für die (maximal) erlaubte Sendeleistung (in dBm EIRP (Effective Isotropic Radiated Power, effektive isotrope abgestrahlte Leistung) in Abhängigkeit der Entfernung (in Meter) vom Zentrum der Maut- oder Zollstation mit gestrichelter Linie dar. Ein Abstufungsbeispiel mit drei Sendeleistungsstufen für eine Telekommunikationseinrichtung 20 (für verschiedene Entfernungsbereiche vom Zentrum der Mautstation) ist mit durchgezogener Linie dargestellt (die entsprechenden Zonen sind kreisförmig oder ringförmig um die Mautstation angeordnet; in Figur 8 dargestellt ist jedoch lediglich ein Radius einer solchen Zonenanordnung); erkennbar ist, dass für jeden der drei Entfernungsbereiche (0 bis 70 m Abstand vom Zentrum der Mautstation; 70 bis 170 m Abstand vom Zentrum der Mautstation; 170 bis 200 m Abstand vom Zentrum der Mautstation) die jeweils gewählte (im jeweiligen Bereich konstante) maximale Sendeleistung den kontinuierlich verlaufenden Grenzwert nicht überschreitet. Der Bereich von 0 bis 70 m Abstand vom Zentrum der Mautstation entspricht somit einer inneren Zone (entsprechend der geographische Zone 60) (mit einer (konstanten) maximalen Sendeleistung von (beispielhaft) 10 dBm), der Bereich von 70 bis 170 m Abstand vom Zentrum der Mautstation entspricht somit einer mittleren Zone (entsprechend der ersten weiteren geographische Zone 80) (mit einer (konstanten) maximalen Sendeleistung von (beispielhaft) 25 dBm), und der Bereich von 170 bis 200 m Abstand vom Zentrum der Mautstation entspricht einer äußeren Zone (entsprechend der zweiten weiteren geographische Zone 80) (mit einer (konstanten) maximalen Sendeleistung von (beispielhaft) 33 dBm).

Nachfolgend werden - neben der in Figur 1 dargestellten Möglichkeit der Definition der geographische Zone 60 in Form eines Kreises mit einem vorgegebenen Radius 62 um eine vorgegebene (geographische) Position 61 als Zentrum - verschiedene weitere Möglichkeiten zur Definition der geographische Zone 60 bzw. der ersten und zweiten weiteren geographische Zonen 80, 90 beispielhaft aufgezeigt:
Figur 2 zeigt schematisch das weitere Beispiel einer geographischen Zone 60 in Form einer Ellipse um eine vorgegebene Position 63 als Zentrum und einer vorgegebenen ersten Halbachse 64 und einer vorgegebenen zweiten Halbachse 65.
Figur 3 zeigt schematisch das weitere Beispiel einer geographischen Zone 60 in Form eines Polygons, wobei das Polygon durch eine Anzahl von vorgegebenen Positionen 66 bestimmt ist.
Figur 4 zeigt schematisch das weitere Beispiel einer geographische Zone 60 in Form eines Polygons, wobei das Polygon durch eine vorgebene Position 67 und eine Anzahl von vorgegebenen hierzu relativen Abständen 68 bestimmt ist. Alles diese in den Figuren 1 bis 4 dargestellten Beispiele zur Definition der geographische Zone 60 gelten analog auch als Möglichkeit zur Definition der ersten weiteren geographische Zone 80 und/oder zur Definition der zweiten weiteren geographische Zone 80.

Zwei Beispiele der geographische Zone 60 sowie der ersten und zweiten weiteren geographische Zone 80, 90 sind in Figur 5 schematisch dargestellt. Jeweils ist die geographische Zone 80 als kleinste geographische Zone, die erste weitere geographische Zone 80 als nächst größere geographische Zone und die zweite weitere geographische Zone 90 als größte geographische Zone dargestellt.
In einer ersten beispielhaften Abbildung auf der linken Seite der Figur 5 ist eine Anordnung dieser geographischen Zonen 60, 80, 90 dargestellt, bei der die zweite weitere geographische Zone 90 sowohl die geographische Zone 60 als auch die erste weitere geographische Zone 80 umfasst und bei der die erste weitere geographische Zone 80 die geographische Zone 60 umfasst, d.h. die geographische Zone 60 ist eine echte Teilmenge der ersten weiteren geographische Zone 80 und die erste weitere geographische Zone 80 ist wiederum eine echte Teilmenge der zweiten weiteren geographische Zone 90. Dies muss jedoch keine strikte Bedingung sein, d.h. es ist denkbar, dass ein Teil der Begrenzung der zweiten weiteren geographischen Zone 90 mit der Begrenzung der geographischen Zone 60 und/oder der ersten weiteren geographischen Zone 80 zusammenfällt oder aber, dass die geographische Zone 60 (in Teilbereichen oder vollständig) und/oder die erste weitere geographische Zone 80 (in Teilbereichen oder vollständig) über die zweite weitere geographische Zone 90 hinausgeht.
In einer zweiten beispielhaften Abbildung auf der rechten Seite der Figur 5 ist eine Anordnung der geographischen Zonen 60, 80, 90 dargestellt, bei der die zweite weitere geographische Zone 90 die erste weitere geographische Zone 80 (und ebenfalls die geographische Zone 60) umschließt oder umgibt (d.h. die zweite geographische Zone 90 weist im Gebiet der ersten weiteren geographischen Zone 80 und im Gebiet der geographischen Zone 60 ein Loch auf und es liegt keine Teilmengenbeziehung vor); analog umschließt bzw. umgibt die erste weitere geographische Zone 80 in der beispielhaften Darstellung auf der rechten Seite der Figur 5 die geographische Zone 60.

Letztlich ist die Definition der geographische Zonen 60, 80, 90 als gegenseitig (zumindest teilweise) überlappend (linker Teil in Figur 5) oder nicht (rechter Teil in Figur 5) insofern eher zweitrangig als es mit Blick auf eine abgestufte Steuerung eines Parameters bzw. einer Vorgabe hinsichtlich der Steuerung der Telekommunikationseinrichtung 20 für bestimmte geographische Zonen jedenfalls maßgeblich ist, dass die jeweilige Steuerungsvorgabe in der jeweiligen geographische Zone erfüllt wird. Für das Beispiel einer Sendeleistungssteuerung der Telekommunikationseinrichtung 20 muss gewährleistet sein, dass bei Sendeaktivitäten der Telekommunikationseinrichtung 20 von Fahrzeugkommunikationsnachrichten - insbesondere im Frequenzbereich von 5875 bis 5925 MHz in den sogenannten Tolling Zones der Toll Plazas - eine maximale Sendeleistung nicht überschritten wird, d.h. für den Fall der Überlappung zweier der geographischen Zonen 60, 80, 90 (etwa die geographische Zone 60 und die erste weitere geographische Zone 80) und bei einer Positionierung der Telekommunikationseinrichtung 20 in der Zone mit stärkerer Einschränkung der Vorgabe (d.h. hier in der geographischen Zone 60 mit der stärksten Einschränkung bzw. größten Reduzierung hinsichtlich der Sendeleistung) werden beide Vorgaben (sowohl die Sendeleistungsvorgabe gemäß der ersten weiteren geographische Zone 80 als auch die Sendeleistungsvorgabe gemäß der geographischen Zone 60) beachtet, was zur Beachtung der stärkeren Vorgabe im entsprechenden Bereich führt. Zum gleichen Ergebnis führt auch der Fall von diskunkten geographische Zonen 60, 80, 90, die aber aneinander anschließen bzw. aneinander angrenzen oder sich - zumindest teilweise - umschließen; auch hier wird nach dem Übergang der Telekommunikationseinrichtung 20 in die geographische Zone mit stärkerer Einschränkung der Vorgabe (etwa in der geographischen Zone 60 gegenüber der ersten weiteren geographische Zone 80) die stärkere Vorgabe im entsprechenden Bereich beachtet und es resultiert in beiden Fällen, dass eine sich (etwa auf einer Straße) bewegende Telekommunikationseinrichtung 20 zuerst in die zweite weitere geographische Zone 90 einfährt, anschließend (entweder - bei Überlappung der geographisches Zonen - zusätzlich oder auch nicht zusätzlich - bei disjunkten geographische Zonen) in die erste weitere geographische Zone 80 und anschließend (wiederum entweder - bei Überlappung der geographisches Zonen - zusätzlich oder auch nicht zusätzlich - bei disjunkten geographische Zonen) in die geographische Zone 60 einfährt. Die geographischen Zone 60, 80, 90 sind insbesondere derart angeordnet, dass nach Durchfahren und Verlassen der geographischen Zone 60 die Telekommunikationseinrichtung 20 in die erste weitere geographische Zone 80 einfährt und danach (d.h. nach deren Durchfahren und Verlassen) in die zweite weitere geographische Zone 90 einfährt.

Die Figuren 6 und 7 zeigen jeweils schematisch ein Beispiel einer Definition der geographischen Zonen 60, 80, 90 mittels Teilzonen 70, 71, 72. Die geographische Zonen 60, 80, 90 sind hierbei im Umfeld einer schematisch wiedergegebenen Mautstation 50 mit einem ebenfalls schematisch dargestellten Straßenverlauf dargestellt.

Hierbei findet bei der in Figur 6 beispielhaft dargestellten Situation ein sowohl für die geographische Zone 60, als auch für die erste und zweite weitere geographische Zonen 80, 90 verwendetes Raster Anwendung, d.h. sowohl die geographische Zone 60 als auch die erste und zweite weitere geographische Zone 80, 90 weisen (gleichartige) Teilzonen 70 auf, die in Figur 6 für die geographische Zone 60 mit durchgezogener Linie, für die erste weitere geographische Zone 80 mit gestrichelter Linie und für die zweite weitere geographische Zone 90 wieder mit durchgezogener Linie dargestellt sind. Bei den Teilzonen 70 handelt es sich somit um gleichartige - insbesondere im Wesentlichen rechteckförmige - und untereinander disjunkte Teilzonen 70, die zusammengenommen insbesondere ein zusammenhängendes Gebiet (etwa in der Umgebung einer Mautstation 50 oder einer Zollstation 50) bilden. Die Teilzonen 70 sind im Beispiel der Figur 6 für alle geographische Zone 60, 80, 90 entlang des gleichen Rasters angeordnet.

Demgegenüber finden bei der in Figur 7 beispielhaft dargestellten Situation zwei verchiedene Raster Anwendung, ein erstes Raster (umfassend erste Teilzonen 71) für die geographische Zone 60 und ein zweites Raster (umfassend zweite Teilzonen 72) für die erste weitere geographische Zone 80 und für die zweite weitere geographische Zone 90, d.h. die geographische Zone 60 weist erste Teilzonen 71 auf (die in Figur 7 für die geographische Zone 60 mit durchgezogener Linie dargestellt sind) und sowohl die erste weitere als auch die zweite weitere geographische Zone 80, 90 weisen (gleichartige) zweite Teilzonen 72 auf (die in Figur 7 für die erste weitere geographische Zone 80 mit gestrichelter Linie und für die zweite weitere geographische Zone 90 wieder mit durchgezogener Linie dargestellt sind). Bei den ersten und zweiten Teilzonen 71, 72 handelt es sich somit um unterschiedliche, jedoch unter jeweils den ersten Teilzonen 71 bzw. den zweiten Teilzonen 72 um gleichartige - insbesondere im Wesentlichen rechteckförmige - und untereinander disjunkte Zonen bzw. Bereiche, die zusammengenommen insbesondere jeweils ein zusammenhängendes Gebiet (etwa in der Umgebung einer Mautstation 50 oder einer Zollstation 50) bilden. Erfindungsgemäß ist es ebenfalls möglich und vorgesehen (jedoch nicht in den Figuren dargestellt), dass eine andere Aufteilung des ersten und zweiten Rasters unter den geographischen Zonen 60, 80, 90 erfolgt (also beispielsweise die Definition der geographischen Zone 60 und der zweiten weiteren geographischen Zone 90 unter Nutzung des ersten Rasters (d.h. mit den ersten Teilzonen 71) und die erste weitere geographische Zone 80 unter Nutzung des zweiten Rasters (d.h. mit den zweiten Teilzonen 72)) oder dass anstelle von zwei verschiedenen Rastern für drei verschiedene Arten von geographischen Zonen 60, 80, 90 drei verschiedene Raster (wodurch neben den ersten und zweiten Teilzonen 71, 72 nocht dritte Teilzonen zu definieren wären) verwendet werden.

Erfindungsgemäß gilt, dass ein Raster zur Definition der Teilzonen 70 (bzw. der ersten Teilzonen 71 bzw. der zweiten Teilzonen 72) gemäß oder analog der sogenannten C-V2X-Zonen verwendet wird oder ein Raster verwendet wird, das bezüglich des Rasters gemäß der C-V2X-Zonen verschoben (wobei zu dessen Definition insbesondere eine absolute Koordinatenangabe als Ausgangspunkt des Rasters oder eine relative Verschiebeinformation (gegenüber der C-V2X-Zonen) verwendet wird) und/oder verschwenkt (durch zusätzliche Angabe einer Winkelinformation) ist. Hierbei bezeichnen die V2X-Zonen bzw. V2X Zones geographische Zonen bzw. Bereiche, welche in 3GPP LTE Rel-14 für die Ressourcen-Allokierung und Wiederverwendung definiert sind. Hierbei wird ein Raster durch eine Zoneneinteilung eines geographischen Bereichs in Teilzonen definiert, wobei die Position der Telekommunikationseinrichtung 20 (in Form von Abständen in y-Richtung (bzw. Nord-Süd-Richtung) bzw. in x-Richtung (bzw. in Ost-West-Richtung) auf der Erdoberfläche von einem Ausgangspunkt (etwa geographisch 0:0 auf dem Nullmeridian am Äquator)) durch eine jeweils vorgegebene Teilzonenbreitenangabe und eine Teilzonenlängenangabe (jeweils beispielsweise 5 m oder 10 m oder 50 m oder 100 m oder 200 m oder 500 m) dividiert wird und dadurch ein eindeutiges Zahlenpaar (d.h. jeweils eine Zahl für die y-Richtung und für die x-Richtung) erhalten wird, das die jeweilige Teilzone bezeichnet. Durch die V2X-Zoneneinteilung ist es möglich (durch die Wiederholung einer Gruppe von (beispielsweise 2 mal 2, oder 2 mal 3, jeweils in y-Richtung bzw. in x-Richtung) Teilzonen), eine Zonen-Struktur für die V2X Kommunikation derart abzubilden, dass Telekommunikationseinrichtungen in benachbarten Teilzonen möglichst nicht die gleichen zugewiesenen bzw. freigegebenen Funkresourcen verwenden.

Mit Blick auf die vorliegende Erfindung ist es vorgesehen, dass die zur Telekommunikationseinrichtung 20 (im ersten Schrittt) übertragene Zoneninformation auf ein solches Raster (und die dadurch definierten Teilzonen) - d.h. im Sinne der oben angesprochenen V2X-Zonen oder aber auf ein anders definiertes Raster, etwa aus dem Raster der V2X-Zonen durch Verschiebung und/oder Verschwenkung hervorgegangenes Raster- referenziert und wenigstens eine Steuerungsinformation bezüglich der Vorgabe zur Steuerung der Telekommunikationseinrichtung 20 innerhalb jeder einzelnen der verschiedenen Teilzonen 70 der betrachteten geographischen Zone 60, 80, 90 umfasst. Eine solche Steuerungsinformation ist erfindungsgemäß insbesondere in Form einer Bitmapinformation oder in Form einer verallgemeinerten Bitmapinformation vorgesehen, wobei beispielsweise eine Anordnung von acht mal acht Bits auf acht mal acht Teilzonen 70 (bzw. ersten Teilzonen 71 bzw. zweiten Teilzonen 72) referenziert, wobei die eine der beiden möglichen Biteinstellungen (als Steuerungsinformation für die jeweilige Teilzone) indiziert, dass eine vorbestimmte Steuerungsvorgabe in der betreffenden Teilzone gelten soll, und die andere der beiden möglichen Biteinstellungen indiziert, dass die vorbestimmte Steuerungsvorgabe in der betreffenden Teilzone nicht gelten soll. In entsprechender Weise ist es alternativ hierzu auch möglich - nicht nur (durch ein einzelnes Bit) eine Vorgabe lediglich entweder einzuschalten oder auszuschalten - mehr als ein Bit pro Teilzone zu verwenden, so dass mittels einer solchen verallgemeinerten Bitmapinformation (mit beispielsweise zwei Bits pro Teilzone) mehr als zwei verschiedene Zustände (etwa vier verschiedene Zustände mit zwei Bits pro Teilzone oder acht verschiedene Zustände mit drei Bits pro Teilzone) indiziert werden können, etwa (bei der Verwendung von zwei Bits pro Teilzone) die Information, dass in der betreffenden Teilzone entweder keine Steuerungsvorgabe existiert (d.h. die betreffende Teilzone ist weder Teil der geographische Zone 60, noch Teil der ersten weiteren geographische Zone 80, noch Teil der zweiten weiteren geographische Zone 90) oder dass in der betreffenden Teilzone eine erste Steuerungsvorgabe existiert (etwa eine Sendeleistungsbegrenzung auf 33 dBm, d.h. die Steuerungsvorgabe der zweiten weiteren geographische Zone 90; damit ist die betreffende Teilzone Teil der zweiten weiteren geographischen Zone 90) oder dass in der betreffenden Teilzone eine zweite Steuerungsvorgabe existiert (etwa eine Sendeleistungsbegrenzung auf 25 dBm, d.h. die Steuerungsvorgabe der ersten weiteren geographische Zone 80; damit ist die betreffende Teilzone Teil der ersten weiteren geographischen Zone 80) oder dass in der betreffenden Teilzone eine dritte Steuerungsvorgabe existiert (etwa eine Sendeleistungsbegrenzung auf 10 dBm, d.h. die Steuerungsvorgabe der geographische Zone 60; damit ist die betreffende Teilzone Teil der geographischen Zone 60).

## Patentansprüche

1. Verfahren zur Steuerung einer Telekommunikationseinrichtung (20) in Abhängigkeit einer ermittelten geographischen Position oder eines ermittelten geographischen Bereichs der Telekommunikationseinrichtung (20), wobei die Telekommunikationseinrichtung (20) - gemäß einer Gerät-zu-Gerät-Funktionalität und/oder einer Sidelink-Funktionalität - zum Austausch von Fahrzeugkommunikationsnachrichten (200, 201) konfiguriert ist, wobei die ermittelte geographische Position oder der ermittelte geographische Bereich der Telekommunikationseinrichtung (20) der geographischen Position oder dem geographischen Bereich der Telekommunikationseinrichtung (20) zu einem betrachteten Ermittlungszeitpunkt entspricht, wobei die Telekommunikationseinrichtung (20) über die Gerät-zu-Gerät-Funktionalität und/oder über die Sidelink-Funktionalität zur Aussendung von Fahrzeugkommunikationsnachrichten (200) und/oder zum Empfang von Fahrzeugkommunikationsnachrichten (201) konfiguriert ist, wobei das Verfahren zur Steuerung der Telekommunikationseinrichtung (20) die folgenden Schritte aufweist:
-- in einem ersten Schritt wird durch wenigstens eine Basisstationseinrichtung (111) eines Telekommunikationsnetzes (100) wenigstens eine Zoneninformation betreffend wenigstens eine geographische Zone (60) zu der Telekommunikationseinrichtung (20) übertragen, wobei die geographische Zone (60) durch eine Anzahl von gleichartigen untereinander disjunkten Teilzonen (70) gebildet wird, wobei die Teilzonen (70) entlang eines Rasters angeordnet sind, wobei als Raster zur Definition der Teilzonen (70) der geographischen Zone (60)
-- ein Raster gemäß oder analog C-V2X-Zonen verwendet wird, oder
-- ein bezüglich des Rasters gemäß C-V2X-Zonen verschobenes Raster verwendet wird, oder
-- ein bezüglich des Rasters gemäß C-V2X-Zonen verschobenes und/oder verschwenktes Raster verwendet wird,
wobei die Zoneninformation - neben der geographischen Zone (60) - eine erste weitere geographische Zone (80) betrifft, wobei die erste weitere geographische Zone die geographische Zone (60) umfasst oder umgibt, wobei die Zoneninformation geographische Informationen und wenigstens eine Steuerungsinformation bezüglich der Vorgabe zur Steuerung der Telekommunikationseinrichtung (20) innerhalb jeder einzelnen der verschiedenen Teilzonen (70) umfasst, wobei
-- ein gleiches Raster für die geographische Zone (60) und die erste weitere geographische Zone (80) verwendet wird, wobei die jeweilige Steuerungsinformation für jede der betrachteten Teilzonen (70) innerhalb der geographischen Zone (60) oder innerhalb der ersten weiteren geographischen Zone (80) in Form einer verallgemeinerten Bitmapinformation als Teil der Zoneninformation übertragen wird, oder wobei
-- für die geographische Zone (60) einerseits ein auf einer ersten Rasterdefinition beruhendes und erste Teilzonen (71) umfassendes erstes Raster verwendet wird und für die erste weitere geographische Zone (80) andererseits ein auf einer zweiten Rasterdefinition beruhendes und zweite Teilzonen (72) umfassendes zweites Raster verwendet wird, wobei die jeweilige Steuerungsinformation für jede der betrachteten ersten Teilzonen (71) in Form einer ersten Bitmapinformation oder einer verallgemeinerten ersten Bitmapinformation und die jeweilige Steuerinformation für jede der betrachteten zweiten Teilzonen (72) in Form einer zweiten Bitmapinformation oder einer verallgemeinerten zweiten Bitmapinformation, jeweils als Teil der Zoneninformation übertragen wird,
-- in einem dem ersten Schritt nachfolgenden zweiten Schritt wird zu einem Ermittlungszeitpunkt die geographische Position oder der geographische Bereich der Telekommunikationseinrichtung (20) ermittelt,
-- in einem dem zweiten Schritt nachfolgenden dritten Schritt wird - für den Fall, dass die ermittelte geographische Position oder der ermittelte geographische Bereich der Telekommunikationseinrichtung (20) als in die geographische Zone (60) fallend erkannt wird - eine Steuerung der Telekommunikationseinrichtung (20) entsprechend einer für die geographische Zone (60) geltenden Vorgabe vorgenommen.

2. Verfahren nach Anspruch 1, **dadurch gekennzeichnet, dass** die Steuerung der Telekommunikationseinrichtung (20) in Abhängigkeit der ermittelten geographischen Position oder des ermittelten geographischen Bereichs der Telekommunikationseinrichtung (20) zur Sendeleistungssteuerung und/oder zur Sendeleistungsbegrenzung der Telekommunikationseinrichtung (20) beim Senden der Fahrzeugkommunikationsnachrichten (200) dient, insbesondere zur Sendeleistungssteuerung und/oder zur Sendeleistungsbegrenzung der Telekommunikationseinrichtung (20) beim Senden in einem den Betrieb von CEN DRSC Mautstationen potentiell störenden Frequenzbereich, insbesondere im Frequenzbereich zwischen 5875 MHz und 5925 MHz, wobei insbesondere die für die geographische Zone (60) geltenden Vorgabe einer geringeren maximal erlaubten Sendeleistung entspricht als außerhalb der geographischen Zone (60).

3. Verfahren nach einem der vorhergehenden Ansprüche, **dadurch gekennzeichnet, dass** die geographische Zone (60) einem statisch vorgegebenen geographischen Bereich - insbesondere in Form eines unter Verwendung von absoluten Koordinatenangaben definierten Georeferenzbereichs - entspricht und dass die geographische Zone (60) insbesondere einem geographischen Bereich oder einem Gebiet in der Umgebung einer Mautstation (50) oder einer Zollstation (50) entspricht.

4. Verfahren nach einem der vorhergehenden Ansprüche, **dadurch gekennzeichnet, dass** die erste weitere geographische Zone einem ersten weiteren statisch vorgegebenen geographischen Bereich - insbesondere in Form eines unter Verwendung von absoluten Koordinatenangaben definierten Georeferenzbereichs - entspricht und/oder dass die erste weitere geographische Zone (80) einem geographischen Bereich oder einem Gebiet in der Umgebung einer Mautstation (50) oder einer Zollstation (50) entspricht.

5. Verfahren nach einem der vorhergehenden Ansprüche, **dadurch gekennzeichnet, dass** die Zoneninformation - neben der geographischen Zone (60) und der ersten weiteren geographischen Zone (80) - eine zweite weitere geographische Zone (90) betrifft, wobei die zweite weitere geographische Zone insbesondere einem zweiten weiteren statisch vorgegebenen geographischen Bereich - insbesondere in Form eines unter Verwendung von absoluten Koordinatenangaben definierten Georeferenzbereichs - entspricht und dass die zweite weitere geographische Zone (90) insbesondere einem geographischen Bereich oder einem Gebiet in der Umgebung einer Mautstation (50) oder einer Zollstation (50) entspricht und insbesondere sowohl die geographische Zone (60) als auch die erste weitere geographische Zone (80) umfasst oder umgibt.

6. Verfahren nach Anspruch 5, **dadurch gekennzeichnet, dass** die Zoneninformation geographische Informationen umfasst, insbesondere unter Verwendung von absoluten Koordinatenangaben zur Bestimmung:
-- der geographischen Zone (60), oder
-- der geographischen Zone (60) und der ersten weiteren geographischen Zone (80), oder
-- der geographischen Zone (60), der ersten weiteren geographischen Zone (80) und der zweiten weiteren geographischen Zone (90)
und/oder dass die Zoneninformation wenigstens eine Steuerungsinformation bezüglich der Vorgabe zur Steuerung der Telekommunikationseinrichtung (20) umfasst, wobei die Steuerungsinformation insbesondere die jeweils maximal erlaubte Sendeleistung
-- innerhalb der geographischen Zone (60), oder
-- innerhalb der geographischen Zone (60) und innerhalb der ersten weiteren geographischen Zone (80), oder
-- innerhalb der geographischen Zone (60), innerhalb der ersten weiteren geographischen Zone (80) und innerhalb der zweiten weiteren geographischen Zone (90)
umfasst.

7. Verfahren nach einem der vorhergehenden Ansprüche, **dadurch gekennzeichnet, dass** die geographische Zone (60) durch eine Anzahl von gleichartigen -im Wesentlichen rechteckförmigen - untereinander disjunkten Teilzonen (70) gebildet wird, wobei die Teilzonen (70) zusammengenommen insbesondere ein zusammenhängendes Gebiet in der Umgebung einer Mautstation (50) oder einer Zollstation (50) bilden,
-- wobei zur Definition des bezüglich des Rasters gemäß C-V2X-Zonen verschobenen Rasters insbesondere eine absolute Koordinatenangabe als Ausgangspunkt des Rasters oder eine relative Verschiebeinformation verwendet wird, und/oder
-- wobei zur Definition des bezüglich des Rasters gemäß C-V2X-Zonen verschobenen und/oder verschwenkten Rasters insbesondere eine absolute Koordinatenangabe als Ausgangspunkt des Rasters und/oder eine relative Verschiebeinformation und/oder eine Winkelinformation verwendet wird.

8. Verfahren nach Anspruch 5, **dadurch gekennzeichnet, dass**
-- ein gleiches Raster für die geographische Zone (60) und sowohl die erste als auch die zweite weitere geographische Zone verwendet wird, wobei die jeweilige Steuerungsinformation für jede der betrachteten Teilzonen (70) innerhalb der zweiten weiteren geographischen Zone (90) in Form einer verallgemeinerten Bitmapinformation als Teil der Zoneninformation übertragen wird, oder wobei
-- für die geographische Zone (60), für die erste weitere geographische Zone (80) und die zweite weitere geographischen Zone (90) das zweite Raster verwendet wird.

9. System zur Steuerung einer Telekommunikationseinrichtung (20) in Abhängigkeit einer ermittelten geographischen Position oder eines ermittelten geographischen Bereichs der Telekommunikationseinrichtung (20), wobei das System die Telekommunikationseinrichtung (20) sowie wenigstens ein Telekommunikationsnetz (100) mit wenigstens einer Basisstationseinrichtung (111) aufweist, wobei die Telekommunikationseinrichtung (20) - gemäß einer Gerät-zu-Gerät-Funktionalität und/oder einer Sidelink-Funktionalität - zum Austausch von Fahrzeugkommunikationsnachrichten (200, 201) konfiguriert ist, wobei die ermittelte geographische Position oder der ermittelte geographische Bereich der Telekommunikationseinrichtung (20) der geographischen Position oder dem geographischen Bereich der Telekommunikationseinrichtung (20) zu einem betrachteten Ermittlungszeitpunkt entspricht, wobei die Telekommunikationseinrichtung (20) über die Gerät-zu-Gerät-Funktionalität und/oder über die Sidelink-Funktionalität zur Aussendung von Fahrzeugkommunikationsnachrichten (200) und/oder zum Empfang von Fahrzeugkommunikationsnachrichten (201) konfiguriert ist, wobei das System derart konfiguriert ist, dass:
-- durch die wenigstens eine Basisstationseinrichtung (111) des Telekommunikationsnetzes (100) wenigstens eine Zoneninformation betreffend wenigstens eine geographische Zone (60) zu der Telekommunikationseinrichtung (20) übertragen wird, wobei die geographische Zone (60) durch eine Anzahl von gleichartigen untereinander disjunkten Teilzonen (70) gebildet wird, wobei die Teilzonen (70) entlang eines Rasters angeordnet sind, wobei als Raster zur Definition der Teilzonen (70) der geographischen Zone (60),
-- ein Raster gemäß oder analog C-V2X-Zonen verwendet wird, oder
-- ein bezüglich des Rasters gemäß C-V2X-Zonen verschobenes Raster verwendet wird, oder
-- ein bezüglich des Rasters gemäß C-V2X-Zonen verschobenes und/oder verschwenktes Raster verwendet wird,
wobei die Zoneninformation - neben der geographischen Zone (60) - eine erste weitere geographische Zone (80) betrifft, wobei die erste weitere geographische Zone die geographische Zone (60) umfasst oder umgibt, wobei die Zoneninformation geographische Informationen und wenigstens eine Steuerungsinformation bezüglich der Vorgabe zur Steuerung der Telekommunikationseinrichtung (20) innerhalb jeder einzelnen der verschiedenen Teilzonen (70) umfasst, wobei
-- ein gleiches Raster für die geographische Zone (60) und die erste weitere geographische Zone (80) verwendet wird, wobei die jeweilige Steuerungsinformation für jede der betrachteten Teilzonen (70) innerhalb der geographischen Zone (60) oder innerhalb der ersten weiteren geographischen Zone (80) in Form einer verallgemeinerten Bitmapinformation als Teil der Zoneninformation übertragen wird, oder wobei
-- für die geographische Zone (60) einerseits ein auf einer ersten Rasterdefinition beruhendes und erste Teilzonen (71) umfassendes erstes Raster verwendet wird und für die erste weitere geographische Zone (80) andererseits ein auf einer zweiten Rasterdefinition beruhendes und zweite Teilzonen (72) umfassendes zweites Raster verwendet wird, wobei die jeweilige Steuerungsinformation für jede der betrachteten ersten Teilzonen (71) in Form einer ersten Bitmapinformation oder einer verallgemeinerten ersten Bitmapinformation und die jeweilige Steuerinformation für jede der betrachteten zweiten Teilzonen (72) in Form einer zweiten Bitmapinformation oder einer verallgemeinerten zweiten Bitmapinformation, jeweils als Teil der Zoneninformation übertragen wird,
-- zu einem Ermittlungszeitpunkt die geographische Position oder der geographische Bereich der Telekommunikationseinrichtung (20) ermittelt wird,
-- für den Fall, dass die ermittelte geographische Position oder der ermittelte geographische Bereich der Telekommunikationseinrichtung (20) als in die geographische Zone (60) fallend erkannt wird - eine Steuerung der Telekommunikationseinrichtung (20) entsprechend einer für die geographische Zone (60) geltenden Vorgabe vorgenommen wird.

10. Telekommunikationseinrichtung (20), insbesondere Fahrzeugtelekommunikationseinrichtung (20), steuerbar in Abhängigkeit einer ermittelten geographischen Position oder eines ermittelten geographischen Bereichs der Telekommunikationseinrichtung (20), wobei die Telekommunikationseinrichtung (20) - gemäß einer Gerät-zu-Gerät-Funktionalität und/oder einer Sidelink-Funktionalität - zum Austausch von Fahrzeugkommunikationsnachrichten (200, 201) konfiguriert ist, wobei die ermittelte geographische Position oder der ermittelte geographische Bereich der Telekommunikationseinrichtung (20) der geographischen Position oder dem geographischen Bereich der Telekommunikationseinrichtung (20) zu einem betrachteten Ermittlungszeitpunkt entspricht, wobei die Telekommunikationseinrichtung (20) über die Gerät-zu-Gerät-Funktionalität und/oder über die Sidelink-Funktionalität zur Aussendung von Fahrzeugkommunikationsnachrichten (200) und/oder zum Empfang von Fahrzeugkommunikationsnachrichten (201) konfiguriert ist, wobei die Fahrzeugtelekommunikationseinrichtung (20) derart konfiguriert ist, dass:
-- von wenigstens einer Basisstationseinrichtung (111) eines Telekommunikationsnetzes (100) wenigstens eine Zoneninformation betreffend wenigstens eine geographische Zone (60) durch die Telekommunikationseinrichtung (20) empfangen wird, wobei die geographische Zone (60) durch eine Anzahl von gleichartigen untereinander disjunkten Teilzonen (70) gebildet wird, wobei die Teilzonen (70) entlang eines Rasters angeordnet sind, wobei als Raster zur Definition der Teilzonen (70) der geographischen Zone (60),
-- ein Raster gemäß oder analog C-V2X-Zonen verwendet wird, oder
-- ein bezüglich des Rasters gemäß C-V2X-Zonen verschobenes Raster verwendet wird, oder
-- ein bezüglich des Rasters gemäß C-V2X-Zonen verschobenes und/oder verschwenktes Raster verwendet wird,
wobei die Zoneninformation - neben der geographischen Zone (60) - eine erste weitere geographische Zone (80) betrifft, wobei die erste weitere geographische Zone die geographische Zone (60) umfasst oder umgibt, wobei die Zoneninformation geographische Informationen und wenigstens eine Steuerungsinformation bezüglich der Vorgabe zur Steuerung der Telekommunikationseinrichtung (20) innerhalb jeder einzelnen der verschiedenen Teilzonen (70) umfasst, wobei
-- ein gleiches Raster für die geographische Zone (60) und die erste weitere geographische Zone (80) verwendet wird, wobei die jeweilige Steuerungsinformation für jede der betrachteten Teilzonen (70) innerhalb der geographischen Zone (60) oder innerhalb der ersten weiteren geographischen Zone (80) in Form einer verallgemeinerten Bitmapinformation als Teil der Zoneninformation übertragen wird, oder wobei
-- für die geographische Zone (60) einerseits ein auf einer ersten Rasterdefinition beruhendes und erste Teilzonen (71) umfassendes erstes Raster verwendet wird und für die erste weitere geographische Zone (80) andererseits ein auf einer zweiten Rasterdefinition beruhendes und zweite Teilzonen (72) umfassendes zweites Raster verwendet wird, wobei die jeweilige Steuerungsinformation für jede der betrachteten ersten Teilzonen (71) in Form einer ersten Bitmapinformation oder einer verallgemeinerten ersten Bitmapinformation und die jeweilige Steuerinformation für jede der betrachteten zweiten Teilzonen (72) in Form einer zweiten Bitmapinformation oder einer verallgemeinerten zweiten Bitmapinformation, jeweils als Teil der Zoneninformation übertragen wird,
-- zu einem Ermittlungszeitpunkt, insbesondere wiederholt, die geographische Position oder der geographische Bereich der Telekommunikationseinrichtung (20) ermittelt wird,
-- für den Fall, dass die ermittelte geographische Position oder der ermittelte geographische Bereich der Telekommunikationseinrichtung (20) als in die geographische Zone (60) fallend erkannt wird - eine Steuerung der Telekommunikationseinrichtung (20) entsprechend einer für die geographische Zone (60) geltenden Vorgabe erfolgt.

11. Basisstationseinrichtung (111) eines Telekommunikationsnetzes (100) oder Telekommunikationsnetz (100) mit einer Basisstationseinrichtung (111) zur Steuerung einer Telekommunikationseinrichtung (20) nach Anspruch 10, wobei die Basisstationseinrichtung (111) derart konfiguriert ist, dass durch die Basisstationseinrichtung (111) die wenigstens eine Zoneninformation betreffend die wenigstens eine geographische Zone (60) zu der Telekommunikationseinrichtung (20) übertragen wird.

12. Computerprogramm umfassend Befehle, mit deren Hilfe die Schritte eines Verfahrens nach einem der Ansprüche 1 bis 8 durchführbar sind, wenn das Computerprogramm auf einer programmierbaren Einrichtung, insbesondere als Teil des Systems, oder auf der Telekommunikationseinrichtung (20) oder auf der Basisstationseinrichtung (111) ausgeführt wird oder wenn das Computerprogramm teilweise auf der Telekommunikationseinrichtung (20) oder einem mit der Telekommunikationseinrichtung (20) verbundenen Fahrzeug (21) und teilweise auf der Basisstationseinrichtung (111) des Telekommunikationsnetzes (100) ausgeführt wird.

13. Computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das Computerprogramm nach Anspruch 12 speichert oder überträgt oder wobei das computerlesbare Medium oder das Datenträgersignal den auf der Telekommunikationseinrichtung (20) oder einem mit der Telekommunikationseinrichtung (20) verbundenen Fahrzeug (21) auszuführenden Teil des Computerprogramms nach Anspruch 12 oder den auf der Basisstationseinrichtung (111) des Telekommunikationsnetzes (100) auszuführenden Teil des Computerprogramms nach Anspruch 12 speichert oder überträgt.

## Claims

1. Method for controlling a telecommunications device (20) as a function of a detected geographical position or detected geographical region of the telecommunications device (20), the telecommunications device (20) being configured - in accordance with a device-to-device functionality and/or a sidelink functionality - to exchange vehicle communications messages (200, 201), the detected geographical position or detected geographical region of the telecommunications device (20) corresponding to a detection time under consideration, the telecommunications device (20) being configured to send vehicle communications messages (200) and/or to receive vehicle communications messages (201) by way of the device-to-device functionality and/or by way of the sidelink functionality, the method for controlling the telecommunications device (20) comprising the following steps:
- in a first step, at least one base station device (111) of a telecommunications network (100) transmits at least one piece of zone information relating to at least one geographical zone (60) to the telecommunications device (20), the geographical zone (60) being formed by a number of similar, mutually disjoint subzones (70), the subzones (70) being arranged along a grid,
- a grid in accordance with or analogous to C-V2X zones or
- a grid offset from the grid in accordance with C-V2X zones or
- a grid offset and/or rotated from the grid in accordance with C-V2X zones
being used as a grid for defining the subzones (70) of the geographical zone (60), the piece of zone information relating to a first further geographical zone (80) - as well as to the geographical zone (60) - the first further geographical zone comprising or enclosing the geographical zone (60), the piece of zone information comprising geographical information and at least one piece of control information relating to the specification for controlling the telecommunications device (20) within each individual one of the various subzones (70),
- an identical grid being used for the geographical zone (60) and the first further geographical zone (80), the respective piece of control information for each of the subzones (70) under consideration within the geographical zone (60) or within the first further geographical zone (80) being transmitted in the form of a piece of generalised bitmap information as part of the piece of zone information, or
- a first grid based on a first grid definition and comprising first subzones (71) being used for the geographical zone (60) and a second grid based on a second grid definition and comprising second subzones (72) being used for the first further geographical zone (80), the respective piece of control information for each of the first subzones (71) under consideration being transmitted in the form of a first piece of bitmap information or a first piece of generalised bitmap information and the respective piece of control information for each of the second subzones (72) under consideration being transmitted in the form of a second piece of bitmap information or a second piece of generalised bitmap information, in each case as part of the piece of zone information,
- in a second step following the first step, at a detection time, the geographical position or geographical region of the telecommunications device (20) is detected,
- in a third step following the second step, if the detected geographical position or detected geographical region of the telecommunications device (20) is determined to fall within the geographical zone (60) the telecommunications device (20) is controlled in accordance with a specification applicable to the geographical zone (60).

2. Method according to claim 1, **characterised in that** the control system of the telecommunications device (20) provides transmission power control and/or transmission power limitation of the telecommunications device (20) when the vehicle communications messages (200) are sent, as a function of the detected geographical position or detected geographical region of the telecommunications device (20), in particular providing transmission power control and/or transmission power limitation of the telecommunications device (20) when transmitting in a frequency range potentially interfering with the operation of CEN DRSC toll stations, in particular in the frequency range between 5875 MHz and 5925 MHz, the specification applicable to the geographical zone (60) in particular corresponding to a lower maximum permitted transmission power than outside the geographical zone (60).

3. Method according to any of the preceding claims, **characterised in that** the geographical zone (60) corresponds to a statically specified geographical region - in particular in the form of a georeference region defined using absolute coordinate specifications - and **in that** the geographical zone (60) corresponds in particular to a geographical region or to an area in the vicinity of a toll station (50) or customs station (50).

4. Method according to any of the preceding claims, **characterised in that** the first further geographical zone corresponds to a first further statically specified geographical region - in particular in the form of a georeference region defined using absolute coordinate specifications - and/or **in that** the first further geographical zone (80) corresponds to a geographical region or to an area in the vicinity of a toll station (50) or customs station (50).

5. Method according to any of the preceding claims, **characterised in that** the piece of zone information relates to a second further geographical zone (90) - as well as to the geographical zone (60) and the first further geographical zone (80) - the second further geographical zone in particular corresponding to a second further statically specified geographical region - in particular in the form of a georeference region defined using absolute coordinate specifications - and **in that** the second further geographical zone (90) corresponds in particular to a geographical region or to an area in the vicinity of a toll station (50) or customs station (50) and in particular comprises or encloses both the geographical zone (60) and the first further geographical zone (80).

6. Method according to claim 5, **characterised in that** the piece of zone information comprises geographical information, in particular using absolute coordinate specifications to determine:
- the geographical zone (60) or
- the geographical zone (60) and the first further geographical zone (80) or
- the geographical zone (60), the first further geographical zone (80) and the second further geographical zone (90),
and/or **in that** the piece of zone information comprises at least one piece of control information relating to the specification for controlling the telecommunications device (20), the piece of control information in particular comprising the maximum permitted transmission power in each case
- within the geographical zone (60) or
- within the geographical zone (60) and within the first further geographical zone (80) or
- within the geographical zone (60), within the first further geographical zone (80) and within the second further geographical zone (90).

7. Method according to any of the preceding claims, **characterised in that** the geographical zone (60) is formed by a number of similar - substantially rectangular - mutually disjoint subzones (70), the subzones (70) together forming in particular a cohesive area in the vicinity of a toll station (50) or customs station (50),
- in particular an absolute coordinate specification being used as a starting point of a grid or as a piece of relative offset information to define the grid which is offset from the grid in accordance with C-V2X zones, and/or
- in particular an absolute coordinate specification being used as a starting point of a grid and/or as a piece of relative offset information and/or as a piece of angle information to define the grid which is offset and/or rotated from the grid in accordance with C-V2X zones.

8. Method according to claim 5, **characterised in that**
- an identical pattern is used for the geographical zone (60) and for both the first and the second further geographical zone, the respective piece of control information for each of the subzones (70) under consideration within the second further geographical zone (90) being transmitted in the form of a piece of generalised bitmap information as part of the piece of zone information, or
- the second grid being used for the geographical zone (60), for the first further geographical zone (80) and the second further geographical zone (90).

9. System for controlling a telecommunications device (20) as a function of a detected geographical position or detected geographical region of the telecommunications device (20), the system comprising the telecommunications device (20) and at least one telecommunications network (100) having at least one base station device (111), the telecommunications device (20) being configured - in accordance with a device-to-device functionality and/or a sidelink functionality - to exchange vehicle communications messages (200, 201), the detected geographical position or detected geographical region of the telecommunications device (20) corresponding to a detection time under consideration, the telecommunications device (20) being configured to send vehicle communications messages (200) and/or to receive vehicle communications messages (201) by way of the device-to-device functionality and/or by way of the sidelink functionality, the system being configured in such a way that:
- the at least one base station device (111) of the telecommunications network (100) transmits at least one piece of zone information relating to at least one geographical zone (60) to the telecommunications device (20), the geographical zone (60) being formed by a number of similar, mutually disjoint subzones (70), the subzones (70) being arranged along a grid,
- a grid in accordance with or analogous to C-V2X zones or
- a grid offset from the grid in accordance with C-V2X zones or
- a grid offset and/or rotated from the grid in accordance with C-V2X zones
being used as a grid for defining the subzones (70) of the geographical zone (60), the piece of zone information relating to a first further geographical zone (80) - as well as to the geographical zone (60) - the first further geographical zone comprising or enclosing the geographical zone (60), the piece of zone information comprising geographical information and at least one piece of control information relating to the specification for controlling the telecommunications device (20) within each individual one of the various subzones (70),
- an identical grid being used for the geographical zone (60) and the first further geographical zone (80), the respective piece of control information for each of the subzones (70) under consideration within the geographical zone (60) or within the first further geographical zone (80) being transmitted in the form of a piece of generalised bitmap information as part of the piece of zone information, or
- a first grid based on a first grid definition and comprising first subzones (71) being used for the geographical zone (60) and a second grid based on a second grid definition and comprising second subzones (72) being used for the first further geographical zone (80), the respective piece of control information for each of the first subzones (71) under consideration being transmitted in the form of a first piece of bitmap information or a first piece of generalised bitmap information and the respective piece of control information for each of the second subzones (72) under consideration being transmitted in the form of a second piece of bitmap information or a second piece of generalised bitmap information, in each case as part of the piece of zone information,
- at a detection time the geographical position or geographical region of the telecommunications device (20) is detected,
- if the detected geographical position or detected geographical region of the telecommunications device (20) is determined to fall within the geographical zone (60), the telecommunications device (20) is controlled in accordance with a specification applicable to the geographical zone (60).

10. Telecommunications device (20), in particular a vehicle telecommunications device (20), controllable as a function of a detected geographical position or detected geographical region of the telecommunications device (20), the telecommunications device (20) being configured - in accordance with a device-to-device functionality and/or a sidelink functionality - to exchange vehicle communications messages (200, 201), the detected geographical position or detected geographical region of the telecommunications device (20) corresponding to the geographical position or geographical region of the telecommunications device (20) at a detection time under consideration, the telecommunications device (20) being configured to send vehicle communications messages (200) and/or to receive vehicle communications messages (201) by way of the device-to-device functionality and/or by way of the sidelink functionality, the vehicle telecommunications device (20) being configured in such a way that:
- the telecommunications device (20) receives at least one piece of zone information relating to at least one geographical zone (60) from at least one base station device (111) of a telecommunications network (100), the geographical zone (60) being formed by a number of similar, mutually disjoint subzones (70), the subzones (70) being arranged along a grid,
- a grid in accordance with or analogous to C-V2X zones or
- a grid offset from the grid in accordance with C-V2X zones or
- a grid offset and/or rotated from the grid in accordance with C-V2X zones
being used as a grid for defining the subzones (70) of the geographical zone (60), the piece of zone information relating to a first further geographical zone (80) - as well as to the geographical zone (60) - the first further geographical zone comprising or enclosing the geographical zone (60), the piece of zone information comprising geographical information and at least one piece of control information relating to the specification for controlling the telecommunications device (20) within each individual one of the various subzones (70),
- an identical grid being used for the geographical zone (60) and the first further geographical zone (80), the respective piece of control information for each of the subzones (70) under consideration within the geographical zone (60) or within the first further geographical zone (80) being transmitted in the form of a piece of generalised bitmap information as part of the piece of zone information, or
- a first grid based on a first grid definition and comprising first subzones (71) being used for the geographical zone (60) and a second grid based on a second grid definition and comprising second subzones (72) being used for the first further geographical zone (80), the respective piece of control information for each of the first subzones (71) under consideration being transmitted in the form of a first piece of bitmap information or a first piece of generalised bitmap information and the respective piece of control information for each of the second subzones (72) under consideration being transmitted in the form of a second piece of bitmap information or a second piece of generalised bitmap information, in each case as part of the piece of zone information,
- at a detection time the geographical position or geographical region of the telecommunications device (20) is detected,
- if the detected geographical position or detected geographical region of the telecommunications device (20) is determined to fall within the geographical zone (60), the telecommunications device (20) is controlled in accordance with a specification applicable to the geographical zone (60).

11. Base station device (111) of a telecommunications network (100), or telecommunications network (100) comprising a base station device (111), for controlling a telecommunications device (20) according to claim 10, the base station device (111) being configured in such a way that the base station device (111) transmits the at least one piece of zone information relating to the at least one geographical zone (60) to the telecommunications device (20).

12. Computer program comprising commands by way of which the steps of a method according to any of claims 1 to 8 can be carried out when the computer program is run on a programmable device, in particular as part of the system, or on the telecommunications device (20) or on the base station device (111), or when the computer program is run in part on the telecommunications device (20) or a vehicle (21) connected to the telecommunications device (20) and in part on the base station device (111) of the telecommunications network (100).

13. Computer-readable medium provided for storing a computer program or data carrier signal provided for transmitting a computer program, wherein the computer-readable medium or data carrier signal stores or transmits the computer program according to claim 12, or wherein the computer-readable medium or data carrier signal stores or transmits the part of the computer program according to claim 12 which is to be run on the telecommunications device (20) or a vehicle (21) connected to the telecommunications device (20) or the part of the computer program according to claim 12 which is to be run on the base station device (111) of the telecommunications network (100).

## Revendications

1. Procédé de commande d'un dispositif de télécommunication (20) en fonction d'une position géographique déterminée ou d'un secteur géographique déterminé du dispositif de télécommunication (20), le dispositif de télécommunication (20) étant configuré - selon une fonctionnalité d'appareil à appareil et/ou une fonctionnalité de liaison latérale (ou Sidelink) - pour échanger des messages de communication de véhicule (200, 201), la position géographique déterminée ou le secteur géographique déterminé du dispositif de télécommunication (20) correspondant à la position géographique ou au secteur géographique du dispositif de télécommunication (20) à un instant de détermination considéré, le dispositif de télécommunication (20) étant configuré, par la fonctionnalité d'appareil à appareil et/ou par la fonctionnalité Sidelink, pour l'émission de messages de communication de véhicule (200) et/ou pour la réception de messages de communication de véhicule (201), le procédé de commande du dispositif de télécommunication (20) présentant les étapes suivantes :
- dans une première étape, au moins une information de zone concernant au moins une zone géographique (60) est transmise au dispositif de télécommunication (20) par au moins un dispositif de station de base (111) d'un réseau de télécommunication (100), la zone géographique (60) étant formée par un certain nombre de sous-zones (70) de même type disjointes les unes des autres, les sous-zones (70) étant disposées le long d'une trame, la trame utilisée pour définir les sous-zones (70) de la zone géographique (60) étant
- une trame selon ou analogue à des zones C-V2X, ou
- une trame décalée par rapport à la trame selon des zones C-V2X, ou
- une trame décalée et/ou pivotée par rapport à la trame selon des zones C-V2X,
l'information de zone concernant - outre la zone géographique (60) - une première autre zone géographique (80), la première autre zone géographique comprenant ou entourant la zone géographique (60), l'information de zone comprenant des informations géographiques et au moins une information de commande concernant la consigne pour la commande du dispositif de télécommunication (20) à l'intérieur de chacune des différentes sous-zones (70), dans lequel
- une même trame est utilisée pour la zone géographique (60) et la première autre zone géographique (80), l'information de commande respective pour chacune des sous-zones (70) considérées à l'intérieur de la zone géographique (60) ou à l'intérieur de la première autre zone géographique (80) étant transmise sous la forme d'une information bitmap généralisée en tant que partie de l'information de zone, ou dans lequel
- pour la zone géographique (60), on utilise d'une part une première trame basée sur une première définition de trame et comprenant des premières sous-zones (71) et, pour la première autre zone géographique (80), on utilise d'autre part une deuxième trame basée sur une deuxième définition de trame et comprenant des deuxièmes sous-zones (72), l'information de commande respective pour chacune des premières sous-zones (71) considérées étant transmise sous la forme d'une première information bitmap ou d'une première information bitmap généralisée et l'information de commande respective pour chacune des deuxièmes sous-zones (72) considérées étant transmise sous la forme d'une deuxième information bitmap ou d'une deuxième information bitmap généralisée, à chaque fois en tant que partie de l'information de zone,
- dans une deuxième étape suivant la première étape, la position géographique ou le secteur géographique du dispositif de télécommunication (20) est déterminé(e) à un instant de détermination,
- dans une troisième étape suivant la deuxième étape, dans le cas où la position géographique déterminée ou le secteur géographique déterminé du dispositif de télécommunication (20) est reconnu(e) comme tombant dans la zone géographique (60), une commande du dispositif de télécommunication (20) est effectuée conformément à une consigne valable pour la zone géographique (60).

2. Procédé selon la revendication 1, **caractérisé en ce que** la commande du dispositif de télécommunication (20) sert, en fonction de la position géographique déterminée ou du secteur géographique déterminé du dispositif de télécommunication (20), à la commande de puissance d'émission et/ou à la limitation de puissance d'émission du dispositif de télécommunication (20) lors de l'émission des messages de communication de véhicule (200), en particulier à la commande de puissance d'émission et/ou à la limitation de puissance d'émission du dispositif de télécommunication (20) lors de l'émission dans une plage de fréquences perturbant potentiellement le fonctionnement de postes de péage CEN DRSC, en particulier dans la plage de fréquences comprise entre 5875 MHz et 5925 MHz, la consigne valable pour la zone géographique (60) correspondant en particulier à une puissance d'émission maximale autorisée plus faible qu'en dehors de la zone géographique (60).

3. Procédé selon l'une des revendications précédentes, **caractérisé en ce que** la zone géographique (60) correspond à un secteur géographique statiquement prédéfini - en particulier sous la forme d'un secteur de géoréférence défini en utilisant des coordonnées absolues - et **en ce que** la zone géographique (60) correspond en particulier à un secteur géographique ou à une région aux alentours d'un poste de péage (50) ou d'un poste de douane (50).

4. Procédé selon l'une des revendications précédentes, **caractérisé en ce que** la première autre zone géographique correspond à un premier autre secteur géographique statiquement prédéfini - en particulier sous la forme d'un secteur de géoréférence défini en utilisant des coordonnées absolues - et/ou **en ce que** la première autre zone géographique (80) correspond à un secteur géographique ou à une région aux alentours d'un poste de péage (50) ou d'un poste de douane (50).

5. Procédé selon l'une des revendications précédentes, **caractérisé en ce que** l'information de zone concerne - outre la zone géographique (60) et la première autre zone géographique (80) - une deuxième autre zone géographique (90), la deuxième autre zone géographique correspondant en particulier à un deuxième autre secteur géographique statiquement prédéfini - en particulier sous la forme d'un secteur de géoréférence défini en utilisant des coordonnées absolues - et **en ce que** la deuxième autre zone géographique (90) correspond en particulier à un secteur géographique ou à une région aux alentours d'un poste de péage (50) ou d'un poste de douane (50) et comprend ou entoure en particulier aussi bien la zone géographique (60) que la première autre zone géographique (80).

6. Procédé selon la revendication 5, **caractérisé en ce que** l'information de zone comprend des informations géographiques, en particulier en utilisant des coordonnées absolues pour déterminer :
- la zone géographique (60), ou
- la zone géographique (60) et la première autre zone géographique (80), ou
- la zone géographique (60), la première autre zone géographique (80) et la deuxième autre zone géographique (90)
et/ou **en ce que** l'information de zone comprend au moins une information de commande concernant la consigne pour la commande du dispositif de télécommunication (20), l'information de commande comprenant en particulier la puissance d'émission maximale respectivement autorisée
- à l'intérieur de la zone géographique (60), ou
- à l'intérieur de la zone géographique (60) et à l'intérieur de la première autre zone géographique (80), ou
- à l'intérieur de la zone géographique (60), à l'intérieur de la première autre zone géographique (80) et à l'intérieur de la deuxième autre zone géographique (90).

7. Procédé selon l'une des revendications précédentes, **caractérisé en ce que** la zone géographique (60) est formée par un certain nombre de sous-zones (70) de même type - sensiblement rectangulaires - disjointes les unes des autres, les sous-zones (70) formant ensemble en particulier une région continue aux alentours d'un poste de péage (50) ou d'un poste de douane (50),
- dans lequel, pour définir la trame décalée par rapport à la trame selon des zones C-V2X, on utilise en particulier une coordonnée absolue comme point de départ de la trame ou une information de décalage relatif, et/ou
- dans lequel, pour définir la trame décalée et/ou pivotée par rapport à la trame selon des zones C-V2X, on utilise en particulier une coordonnée absolue comme point de départ de la trame et/ou une information de décalage relatif et/ou une information angulaire.

8. Procédé selon la revendication 5, **caractérisé en ce que**
- une même trame est utilisée pour la zone géographique (60) et aussi bien pour la première que pour la deuxième autre zone géographique, dans lequel l'information de commande respective pour chacune des sous-zones (70) considérées à l'intérieur de la deuxième autre zone géographique (90) est transmise sous la forme d'une information bitmap généralisée en tant que partie de l'information de zone, ou dans lequel
- la deuxième trame est utilisée pour la zone géographique (60), pour la première autre zone géographique (80) et la deuxième autre zone géographique (90).

9. Système de commande d'un dispositif de télécommunication (20) en fonction d'une position géographique déterminée ou d'un secteur géographique déterminé du dispositif de télécommunication (20), le système présentant le dispositif de télécommunication (20) ainsi qu'au moins un réseau de télécommunication (100) avec au moins un dispositif de station de base (111), le dispositif de télécommunication (20) étant configuré - selon une fonctionnalité d'appareil à appareil et/ou une fonctionnalité de liaison latérale (ou Sidelink) - pour échanger des messages de communication de véhicule (200, 201), la position géographique déterminée ou le secteur géographique déterminé du dispositif de télécommunication (20) correspondant à la position géographique ou au secteur géographique du dispositif de télécommunication (20) à un instant de détermination considéré, le dispositif de télécommunication (20) étant configuré, par la fonctionnalité d'appareil à appareil et/ou par la fonctionnalité Sidelink, pour émettre des messages de communication de véhicule (200) et/ou pour recevoir des messages de communication de véhicule (201), le système étant configuré de telle sorte que :
- au moins une information de zone concernant au moins une zone géographique (60) est transmise au dispositif de télécommunication (20) par ledit au moins un dispositif de station de base (111) du réseau de télécommunication (100), la zone géographique (60) étant formée par un certain nombre de sous-zones (70) de même type disjointes les unes des autres, les sous-zones (70) étant disposées le long d'une trame, la trame utilisée pour définir les sous-zones (70) de la zone géographique (60) étant :
- une trame selon ou analogue à des zones C-V2X, ou
- une trame décalée par rapport à la trame selon des zones C-V2X, ou
- une trame décalée et/ou pivotée par rapport à la trame selon des zones C-V2X,
l'information de zone concernant - outre la zone géographique (60) - une première autre zone géographique (80), la première autre zone géographique comprenant ou entourant la zone géographique (60), l'information de zone comprenant des informations géographiques et au moins une information de commande concernant la consigne pour la commande du dispositif de télécommunication (20) à l'intérieur de chacune des différentes sous-zones (70), dans lequel
- une même trame est utilisée pour la zone géographique (60) et la première autre zone géographique (80), l'information de commande respective pour chacune des sous-zones (70) considérées à l'intérieur de la zone géographique (60) ou à l'intérieur de la première autre zone géographique (80) étant transmise sous la forme d'une information bitmap généralisée en tant que partie de l'information de zone, ou dans lequel
- pour la zone géographique (60), on utilise d'une part une première trame basée sur une première définition de trame et comprenant des premières sous-zones (71) et, pour la première autre zone géographique (80), on utilise d'autre part une deuxième trame basée sur une deuxième définition de trame et comprenant des deuxièmes sous-zones (72), l'information de commande respective pour chacune des premières sous-zones (71) considérées étant transmise sous la forme d'une première information bitmap ou d'une première information bitmap généralisée et l'information de commande respective pour chacune des deuxièmes sous-zones (72) considérées étant transmise sous la forme d'une deuxième information bitmap ou d'une deuxième information bitmap généralisée, à chaque fois en tant que partie de l'information de zone,
- à un instant de détermination, la position géographique ou le secteur géographique du dispositif de télécommunication (20) est déterminé(e),
- dans le cas où la position géographique déterminée ou le secteur géographique déterminé du dispositif de télécommunication (20) est reconnu(e) comme tombant dans la zone géographique (60), une commande du dispositif de télécommunication (20) est effectuée conformément à une consigne valable pour la zone géographique (60).

10. Dispositif de télécommunication (20), en particulier dispositif de télécommunication de véhicule (20), pouvant être commandé en fonction d'une position géographique déterminée ou d'un secteur géographique déterminé du dispositif de télécommunication (20), le dispositif de télécommunication (20) étant configuré - selon une fonctionnalité d'appareil à appareil et/ou une fonctionnalité de liaison latérale (ou Sidelink) - pour échanger des messages de communication de véhicule (200, 201), la position géographique déterminée ou le secteur géographique déterminé du dispositif de télécommunication (20) correspondant à la position géographique ou au secteur géographique du dispositif de télécommunication (20) à un instant de détermination considéré, le dispositif de télécommunication (20) étant configuré, par la fonctionnalité d'appareil à appareil et/ou par la fonctionnalité Sidelink, pour émettre des messages de communication de véhicule (200) et/ou pour recevoir des messages de communication de véhicule (201), le dispositif de télécommunication de véhicule (20) étant configuré de telle sorte que :
- au moins une information de zone concernant au moins une zone géographique (60) est reçue par le dispositif de télécommunication (20) depuis au moins un dispositif de station de base (111) d'un réseau de télécommunication (100), la zone géographique (60) étant formée par un certain nombre de sous-zones (70) de même type disjointes les unes des autres, les sous-zones (70) étant disposées le long d'une trame, la trame utilisée pour définir les sous-zones (70) de la zone géographique (60) étant :
- une trame selon ou analogue à des zones C-V2X, ou
- une trame décalée par rapport à la trame selon des zones C-V2X, ou
- une trame décalée et/ou pivotée par rapport à la trame selon des zones C-V2X,
l'information de zone concernant - outre la zone géographique (60) - une première autre zone géographique (80), la première autre zone géographique comprenant ou entourant la zone géographique (60), l'information de zone comprenant des informations géographiques et au moins une information de commande concernant la consigne pour la commande du dispositif de télécommunication (20) à l'intérieur de chacune des différentes sous-zones (70), dans lequel
- une même trame est utilisée pour la zone géographique (60) et la première autre zone géographique (80), l'information de commande respective pour chacune des sous-zones (70) considérées à l'intérieur de la zone géographique (60) ou à l'intérieur de la première autre zone géographique (80) étant transmise sous la forme d'une information bitmap généralisée en tant que partie de l'information de zone, ou dans lequel
- pour la zone géographique (60), on utilise d'une part une première trame basée sur une première définition de trame et comprenant des premières sous-zones (71) et, pour la première autre zone géographique (80), on utilise d'autre part une deuxième trame basée sur une deuxième définition de trame et comprenant des deuxièmes sous-zones (72), l'information de commande respective pour chacune des premières sous-zones (71) considérées étant transmise sous la forme d'une première information bitmap ou d'une première information bitmap généralisée et l'information de commande respective pour chacune des deuxièmes sous-zones (72) considérées étant transmise sous la forme d'une deuxième information bitmap ou d'une deuxième information bitmap généralisée, à chaque fois en tant que partie de l'information de zone,
- à un instant de détermination, en particulier de manière répétée, la position géographique ou le secteur géographique du dispositif de télécommunication (20) est déterminé(e),
- dans le cas où la position géographique déterminée ou le secteur géographique déterminé du dispositif de télécommunication (20) est reconnu(e) comme tombant dans la zone géographique (60), une commande du dispositif de télécommunication (20) est effectuée conformément à une consigne valable pour la zone géographique (60).

11. Dispositif de station de base (111) d'un réseau de télécommunication (100) ou réseau de télécommunication (100) avec un dispositif de station de base (111) pour la commande d'un dispositif de télécommunication (20) selon la revendication 10, le dispositif de station de base (111) étant configuré de telle sorte que, par le dispositif de station de base (111), ladite au moins une information de zone concernant ladite au moins une zone géographique (60) est transmise au dispositif de télécommunication (20).

12. Programme d'ordinateur comprenant des instructions à l'aide desquelles les étapes d'un procédé selon l'une des revendications 1 à 8 peuvent être mises en œuvre lorsque le programme d'ordinateur est exécuté sur un dispositif programmable, en particulier en tant que partie du système, ou sur le dispositif de télécommunication (20) ou sur le dispositif de station de base (111), ou lorsque le programme d'ordinateur est exécuté en partie sur le dispositif de télécommunication (20) ou sur un véhicule (21) relié au dispositif de télécommunication (20) et en partie sur le dispositif de station de base (111) du réseau de télécommunication (100).

13. Support lisible par ordinateur, prévu pour stocker un programme d'ordinateur, ou signal de support de données, prévu pour transmettre un programme d'ordinateur, dans lequel le support lisible par ordinateur ou le signal de support de données stocke ou transmet le programme d'ordinateur selon la revendication 12 ou dans lequel le support lisible par ordinateur ou le signal de support de données stocke ou transmet la partie du programme d'ordinateur selon la revendication 12 à exécuter sur le dispositif de télécommunication (20) ou sur un véhicule (21) relié au dispositif de télécommunication (20) ou la partie du programme selon la revendication 12 à exécuter sur le dispositif de station de base (111) du réseau de télécommunication (100).
